(19) **Europäisches Patentamt / European Patent Office / Office européen des brevets**

(11) **EP 1 514 131 B1**

(12) **FASCICULE DE BREVET EUROPEEN**

(45) Date de publication et mention de la délivrance du brevet:
**30.07.2008 Bulletin 2008/31**

(21) Numéro de dépôt: **03760037.6**

(22) Date de dépôt: **13.06.2003**

(51) Int Cl.:
*G01S 5/14* (2006.01)   *G01S 1/04* (2006.01)

(86) Numéro de dépôt international:
**PCT/FR2003/001802**

(87) Numéro de publication internationale:
**WO 2003/107031 (24.12.2003 Gazette 2003/52)**

(54) **RECEPTEUR DE POSITIONNEMENT PAR SATELLITE UTILISANT DEUX PROTEUSES DE SIGNAL**

SATELLITENPOSITIONIERUNGSSYSTEM-EMPFÄNGER MIT ZWEI SIGNALTRÄGERN

SATELLITE POSITIONING RECEIVER USING TWO SIGNAL CARRIERS

(84) Etats contractants désignés:
**DE FR GB IT**

(30) Priorité: **14.06.2002 FR 0207377**

(43) Date de publication de la demande:
**16.03.2005 Bulletin 2005/11**

(73) Titulaire: **Thales**
**92526 Neuilly Sur Seine (FR)**

(72) Inventeurs:
• **MARTIN, Nicolas**
**F-94117 Arcueil Cedex (FR)**
• **REVOL, Marc**
**F-94117 Arcueil Cedex (FR)**

(74) Mandataire: **Beylot, Jacques et al**
**Marks & Clerk France**
**31-33 Avenue Aristide Briand**
**94117 Arcueil Cédex (FR)**

(56) Documents cités:
US-A- 4 812 991      US-A- 5 359 332
US-A- 5 602 741      US-B1- 6 556 942

• KAPLAN ET AL: "UNDERSTANDING GPS - Principles and Applications" , UNDERSTANDING GPS PRINCIPLES AND APPLICATIONS, XX, XX, PAGE(S) 142-150 XP002165743 le document en entier

**Description**

Les systèmes de positionnement par satellite mettent en oeuvre, pour une localisation, plusieurs satellites transmettant leurs positions par des signaux radioélectriques et un récepteur placé à la position à localiser estimant les distances dites pseudo-distances, qui le séparent des satellites à partir des temps de propagation des signaux des satellites captés et effectuant la localisation par triangulation. Plus les positions des satellites sont connues avec précision du récepteur et plus les mesures des pseudo-distances faites par le récepteur sont précises, plus la localisation obtenue est précise.

Les positions des satellites sont déterminées à partir d'un réseau de stations sol de poursuite indépendant des récepteurs de positionnement. Elles sont communiquées aux récepteurs de positionnement par les satellites eux-mêmes par transmission de données. Les pseudo-distances sont déduites par les récepteurs de positionnement des retards apparents présentés par les signaux reçus par rapport aux horloges des satellites qui sont toutes synchrones.

Si la précision de la connaissance des positions des satellites du système de positionnement est indépendante des performances d'un récepteur de positionnement, ce n'est pas le cas de celle des mesures de pseudo-distance qui dépend de la précision des mesures de temps de propagation des signaux, au niveau du récepteur.

Les signaux radioélectriques émis par des satellites parcourant de grandes distances, et étant émis avec des puissances limitées, parviennent avec de très faibles puissances aux récepteurs, noyés dans un bruit radioélectrique. Pour faciliter leurs réceptions on a cherché à les rendre les moins sensibles possible aux parasites à bande étroite, en augmentant leurs largeurs de bande au moyen de la technique de la bande étalée. Les systèmes actuels et prévus dans un futur proche, de positionnement par satellites utilisent, pour les signaux radioélectriques émis par leurs satellites, la technique d'étalement de bande par modulation à l'aide de séquences binaires pseudo-aléatoires, technique dite DSSS (sigle tiré de l'anglo-saxon : Direct Sequence Spread Spectrum"). Cette modulation DSSS consiste après avoir mis les informations à transmettre sous la forme d'une suite d'éléments binaires à débit régulier, d'effectuer le produit de chaque élément binaire d'information avec une séquence binaire pseudo-aléatoire de débit nettement plus rapide. L'étalement de bande obtenu est proportionnel au rapport des débits de la suite d'éléments binaires d'information et de la suite binaire pseudo-aléatoire d'étalement.

Les informations à transmettre au niveau des satellites, une fois mises sous forme d'une suite de données binaires étalée en fréquence par une modulation DSSS, sont transposées dans la plage de fréquence d'émission par modulation avec une porteuse d'émission. Pour faciliter les mesures des temps de propagation des signaux au niveau d'un récepteur de positionnement et éviter la présence de raies isolées dans les spectres des signaux émis par les satellites, chaque séquence binaire pseudo-aléatoire utilisée pour un étalement en fréquence est constituée d'éléments binaires de même durée prise égale à des multiples entiers des périodes des porteuses d'émission tandis que les différents débits et fréquences utilisées au sein des satellites sont synchronisés et dérivent d'une horloge commune de grande précision.

En réception, les informations binaires contenues dans un signal radioélectrique de satellite d'un système de positionnement sont extraites par deux démodulations effectuées souvent de manière enchevêtrée, une première démodulation à l'aide d'une porteuse engendrée localement par un oscillateur piloté par une boucle de poursuite en fréquence et en phase dite PLL (sigle tiré de l'anglo-saxon : "Phase Lock Loop") permettant de transposer le signal reçu en bande de base et une deuxième démodulation à l'aide de séquences binaires pseudo-aléatoires engendrées localement par un générateur de séquences binaires pseudo-aléatoires piloté par une boucle de poursuite en temps dite DLL (sigle tiré de l'anglosaxon : Delay Lock Loop) permettant de désétaler la suite d'informations binaires présente dans le signal reçu.

Les temps de propagation des signaux reçus se manifestent, en réception, par des retards affectant les séquences binaires pseudo-aléatoires présentes dans les signaux reçus et la porteuse modulant le signal reçu.

Les retards affectant les séquences binaires pseudo-aléatoires sont accessibles, modulo la durée d'un de leurs éléments binaires, au niveau des signaux d'asservissement des boucles de poursuite en temps DLL. Les retards constatés par ces boucles permettent des mesures non ambiguës ou faiblement ambiguës, des temps de propagation des séquences binaires pseudo-aléatoires car les nombres de séquences pseudo-aléatoires entières s'écoulant pendant les trajets des signaux sont relativement petits. On parle de mesures de code.

Par exemple, pour le système de positionnement par satellites GPS (sigle tiré de l'anglo-saxon :Global Positioning System), la séquence binaire pseudo-aléatoire la plus courte, celle utilisée pour l'étalement des signaux de satellites de type C/A (sigle provenant de l'anglo-saxon :"Coarse/Acquisition Code ou Clear/Aquisition Code), est composée de 1023 éléments binaires avec un débit de 1,023 MHz et une durée d'une milliseconde. Sa durée totale correspond à un trajet de 300 Kms pour une onde radioélectrique et permet des mesures de distance modulo de 300 Kms. La durée de 1 microseconde de chacun de ses éléments binaires autorise une précision de l'ordre de 0,1 microseconde dans la mesure de son retard à la réception correspondant à un trajet de 30 mètres pour une onde radioélectrique. L'ambiguïté des mesures de pseudo-distance obtenues à partir de la séquence binaire pseudo-aléatoire d'un code C/A due au fait que l'on à faire à des mesures modulo 300 Km est facile à lever dès que le récepteur reçoit plus de quatre satellites car il peut alors faire différents points sur la même position à partir de jeux différents de quatre satellites et ne retenir que la solution commune. En l'absence d'une telle possibilité, l'ambiguïté peut être aussi levée à l'aide d'une connaissance préalable très grossière de la position. Une telle ambiguïté de mesure ne se pose pas avec les signaux de satellite du type P du système GPS qui utilisent pour leur étalement une séquence binaire pseudo-aléatoire d'une durée de 266,41 jours mais ces signaux ne sont pas à la libre disposition des utilisateurs.

Les retards apparents des porteuses d'émission sont accessibles, modulo les périodes de ces porteuses, par les déphasages affichés par les boucles de poursuite en fréquence et en phase PLL pilotant les générateurs de porteuses locales. On parle de mesures de phase. Ces mesures sont très précises mais très ambiguës. Dans le cas du système GPS, les signaux d'émission des satellites sont dans les bandes de fréquence de 1,3 GHz et 1,5 GHz, et permettent des mesures de pseudo-distance modulo 0,2 m donc très ambiguës, puisque la distance aux satellites est de l'ordre de 20.000 Kms, précise à environ 0,02 m.

On peut envisager d'utiliser concurremment les mesures de phase et les mesures de code sur un même signal reçu en provenance d'un satellite de positionnement et appliquer une technique de Vernier pour améliorer la précision de la mesure de code peu ambiguë au moyen de la mesure de phase très précise mais très ambiguë. Cependant, la très grande différence entre les échelles de mesure : longueur d'onde de la séquence binaire pseudo-aléatoire du code d'étalement et longueur d'onde de la porteuse d'émission ne permet pas de conserver la précision d'une mesure de phase en levant suffisamment l'ambiguïté pour avoir des mesures de pseudo-distance facilement exploitables.

Il est habituel qu'un satellite d'un système de positionnement émette sur au moins deux plages de fréquences afin dé permettre à un récepteur d'estimer l'effet ionosphérique sur la vitesse de propagation ionosphérique et d'en tenir compte dans ses mesures de pseudo-distances. Ainsi, un satellite GPS émet sur deux plages de fréquences centrées sur 1,575.42 et 1,227.60 GHz. Dans la plage 1,575.42 GHz, il assure deux services de navigation consistant en la transmission des mêmes données d'éphéméride sur deux voies indépendantes étalées dans l'une des voies par un code C/A et dans l'autre par un code P(Y). Dans la plage 1,227.60 GHz, il assure un seul service pouvant consister en la transmission des données étalée par un code C/A ou un code P(y) ou en un simple code P(Y).

Actuellement, les systèmes de positionnement par satellites envisagés sont prévus pour offrir plusieurs services correspondant à des niveaux différents de performances et d'intégrité dans la localisation adaptée aux exigences plus ou moins élevées de différentes catégories d'utilisateurs. C'est le cas du nouveau système de positionnement par satellites Galileo qui offre plusieurs services tous bi-fréquences (E1 & E5, E2 & E6,...) de façon à permettre les corrections ionosphériques et à améliorer la robustesse en cas de brouillage de l'une des bandes, certains services étant à accès libre et d'autres à accès contrôlé.

Dans le cas de services bi-fréquences, les signaux sont poursuivis indépendamment sur chaque bande par des boucles de poursuite PLL et DLL. Les mesures de pseudo-distance, qui reposent sur les retards constatés par les boucles de poursuite DLL, sont limitées en précision par la largeur de chaque bande disponible. Du fait de l'indépendance des boucles de poursuite, toute utilisation conjointe des mesures issues de signaux de largeurs de bande différentes, conduira à une précision limitée par la moins bonne des deux poursuites.

On cherche à obtenir en temps réel une mesure absolue de la distance entre le satellite et le récepteur qui ait une précision donnée par l'écart de fréquence entre les bandes (une fraction de longueur d'onde de l'écart). Pour cela, on cherche à définir une méthode d'amélioration de la précision de mesure plus robuste que la méthode connue du vernier de phase, le plus indépendamment possible des effets ionosphériques, et permettant de profiter, malgré tout, de l'écartement en fréquence entre deux signaux à bande limitée par exemple les signaux E1 et E2.

La présente invention a pour but d'améliorer la précision des mesures de pseudo-distance dans le cadre d'un service bi-fréquence, à signaux synchrones de navigation, d'un système de positionnement par satellites en combinant les signaux reçus sur les deux fréquences pour bénéficier d'une largeur de bande de fréquence équivalente plus importante.

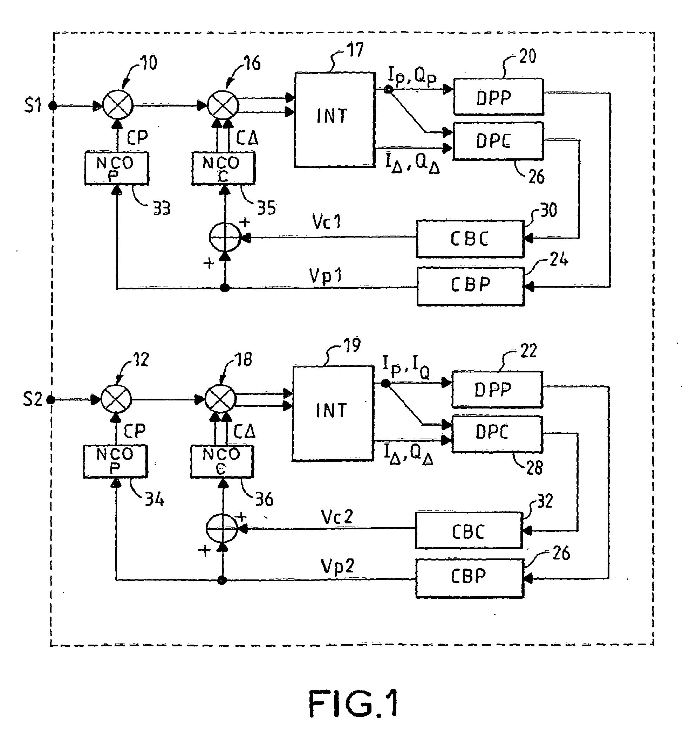

La figure 1 montre un récepteur de l'état de l'art recevant deux signaux S1 et S2 aux respectives fréquences $F_{E1}$ et $F_{E2}$. Ces deux signaux sont traités indépendamment par une boucle de porteuse 10, 12, et une boucle de code 16, 18.

Chacune des boucles de corrélation de code 16, 18, après intégration 17, 19, fournit respectivement à partir des respectifs signaux reçus S1 et S2, d'une part, des signaux $I_P$ et $Q_P$ à un discriminateur de porteuse 20, 22 générant à travers un correcteur de boucle de porteuse 24, 26 la respective vitesse de porteuse Vp1, Vp2, et, d'autre part, les signaux $I_P$, $Q_P$ et $I_\Delta$, $Q_\Delta$ à un discriminateur de phase de code 26, 28 générant à travers un correcteur de boucle de code 30, 32 la respective vitesse de code Vc1 et Vc2.

Un oscillateur à contrôle numérique 33, 34 (NCO p) génère à partir de la vitesse de porteuse Vp1, Vp2 les porteuses locales de la voie de corrélation de porteuse 10, 12.

Un oscillateur à contrôle numérique (NCO c) 35, 36 génère à partir de la vitesse de code Vc1, Vc2 les porteuses locales de la voie de corrélation de code et les codes locaux.

Chaque boucle de porteuse 10, 12 utilise la corrélation par un code ponctuel cp, synchrone du code reçu.

Chaque boucle de code utilise la corrélation par un code delta c∆ (ou avance moins retard), synchrone du ponctuel.

Pour chacune des boucles, le discriminateur de phase de porteuse fournie l'information d'erreur telle que :

$$\delta\varphi = \arctan\!\left(\frac{Q_P}{I_P}\right)$$

et le discriminateur de phase de code une erreur telle que :

$$\delta\varepsilon = \arctan\!\left(\frac{(I_\Delta I_P - Q_\Delta Q_P)}{I_P^2 + Q_P^2}\right)$$

Les deux pseudo-distances issues du traitement des signaux (en sortie des NCO c de code) peuvent être combinées de manière optimale avant d'être utilisées dans la résolution du point de navigation.

L'idée nouvelle faisant l'objet de l'invention consiste à traiter les deux signaux non plus de manière indépendante, mais en réalisant d'une part, la poursuite d'une porteuse centrale entre les porteuses des deux signaux par une boucle de porteuse et, d'autre part, la poursuite d'une sous-porteuse, image des écarts entre chaque porteuse et la porteuse centrale par une deuxième boucle, remplaçant la boucle de code, servant aussi à asservir la position du code local pour le désétalement.

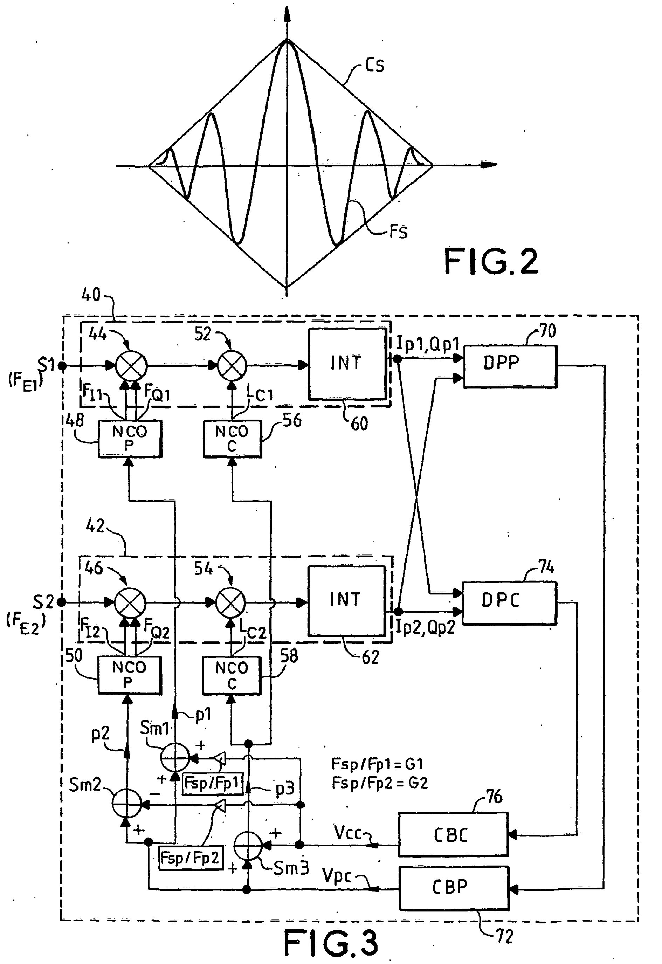

La fonction de corrélation de code résultante du traitement, selon l'invention, des signaux reçus, représentée à la figure 2, est alors le produit entre l'enveloppe de la fonction de corrélation du code seul Cs et une fonction sinusoïdale Fs de fréquence égale à l'écart de fréquence entre les centres des bandes des signaux reçus.

Cette fonction présente donc un seul maximum, plus étroit que celui d'un code simple, permettant d'accéder au travers de la boucle de code à un niveau de précision intermédiaire entre celui d'un code simple et d'une mesure directe de phase sur la porteuse, avec en sus l'avantage d'extraire les mesures avec un rapport signal à bruit double.

L'avantage direct est alors de piloter une seule boucle de code (DDL) donnant des mesures brutes de pseudo-distance beaucoup plus précises. Le gain de précision ainsi obtenu permet d'accroître significativement la précision de l'estimation de la position, quand les autres sources de dégradation peuvent être éliminées ou estimées ; c'est le cas des applications de positionnement différentiel qui permettent d'éliminer les erreurs de propagation ionosphérique, par exemple, pour de précision Cat II et Cat III.

De la même façon, on a besoin de ne poursuivre qu'une seule porteuse, calée sur la fréquence intermédiaire $(F_{E2} - F_{E1})/2$. Des mesures de phase (porteuse) plus précises sont aussi extraites grâce à un rapport signal à bruit double.

A cet effet, l'invention propose un récepteur de localisation de position par satellite destiné à effectuer un traitement combiné d'un premier et un second signaux radioélectriques reçus, séparés en fréquence, caractérisé en ce qu'il comporte :

- un premier et un second circuits corrélateurs recevant respectivement le premier et le second signaux reçus, chaque corrélateur ayant une voie de corrélation en phase et en quadrature entre le respectif signal reçu et une respective porteuse locale, une voie de corrélation de code entre le signal reçu corrélé en I et Q et un respectif code local, un intégrateur par voie de corrélation de code, le récepteur comportant en outre :
- un discriminateur de phase de porteuse centrale entre les deux porteuses des signaux reçus, le discriminateur de phase fournissant, à partir des signaux Ip1 et Qp1 et Ip2 et Qp2 en sortie des deux intégrateurs et après une correction de boucle de phase, un signal de vitesse de porteuse centrale ;
- un dispositif , fournissant, à partir de la vitesse de porteuse centrale et d'une vitesse de sous-porteuse (ou vitesse de code), les respectives porteuses locales pour les voies de corrélation de porteuse, cette sous-porteuse étant l'image des écarts entre chaque porteuse de signal reçu et la porteuse centrale
- un discriminateur de phase de code fournissant, à partir des signaux Ip1 et Qp1 et Ip2 et Qp2 en sortie des intégrateurs et après une correction de boucle de code, le signal de vitesse de sous-porteuse (ou vitesse de code) pour les voies de corrélation de porteuse et de code ;
- un oscillateur contrôlé numériquement, par voie de corrélation de code, l'oscillateur fournissant, à partir de la vitesse de sous-porteuse (ou vitesse de code), le respectif code local pour chaque voie de code.

Dans l'invention, on construit une seule boucle de porteuse et une seule boucle de code pour traiter les deux signaux reçus S1, S2.

La boucle de porteuse asservit la phase de la porteuse centrale des signaux locaux avec la phase de la porteuse centrale des signaux reçus, La boucle de code (ou boucle de sous porteuse) asservit la phase de la sous porteuse locale, image de l'écart de phase entre les porteuses des deux signaux locaux, avec la phase de la sous-porteuse reçue, image de l'écart de phase entre les deux signaux reçus, et la position des codes locaux avec les codes reçus.

La corrélation avec la voie delta des récepteurs de l'art antérieur n'est plus effectuée car l'asservissement du code se fait uniquement à partir de la boucle sur l'écart entre les deux porteuses. En effet, cet écart de phase subit la même dynamique que le retard de code, à la différence de la dynamique de la porteuse qui voit une erreur ionosphérique opposée à celle du code.

L'invention sera mieux comprise à l'aide d'exemples de réalisations du récepteur selon l'invention, en référence aux dessins annexés, dans lesquels :

- la figure 1, déjà décrite représente un récepteur de l'état de l'art comportant une boucle de phase et de code par signal reçu ;
- la figure 2 déjà décrite représente la fonction de corrélation de code résultante du traitement, selon l'invention, des signaux reçus;
- la figure 3 représente un récepteur selon l'invention comportant une seule boucle de code et de phase pour les signaux reçus ;
- la figure 4 représente une variante du récepteur de la figure 3 selon l'invention ;
- la figure 5 représente une autre réalisation du récepteur selon l'invention, comportant trois oscillateurs contrôlés numériquement;
- la figure 6 représente une variante du récepteur de la figure 5 selon l'invention
- la figure 7 montre un synoptique du récepteur selon l'invention lors d'un premier cas d'initialisation ;
- la figure 8 montre une recherche d'énergie sur la fonction d'auto-corrélation lors d'une initialisation du récepteur selon l'invention ;
- la figure 9 montre un synoptique du récepteur selon l'invention lors d'un deuxième cas d'initialisation ;

La figure 3 représente un synoptique d'un récepteur selon l'invention. Dans cette réalisation de la figure 3, la boucle de sous-porteuse ou boucle de code est aidée par la boucle de porteuse centrale.

Le récepteur de la figure 3 comporte un premier circuit corrélateur 40 attaqué par un premier signal reçu S1 à la fréquence $F_{E1}$ et un second circuit corrélateur 42 attaqué par le second signal reçu S2 à la fréquence $F_{E2}$.

Chaque circuit corrélateur comporte une voie de corrélation 44, 46 en phase et en quadrature entre son respectif signal reçu S1, S2 et deux respectives porteuses locales $F_{I1}$, $F_{Q1}$ pour la première voie de corrélation 44 et $F_{I2}$, $F_{Q2}$ pour la deuxième voie 46, ces porteuses locales en quadrature étant générées par un respectif oscillateur à commande numérique de porteuse 48, 50.

Les signaux $I_1$, $Q_1$ et $I_2$, $Q_2$ en sortie des voies de corrélation de porteuse de phase sont ensuite corrélés dans une respective voie de corrélation de code 52, 54 avec le code local fournit par un respectif générateur numérique de code local 56, 58.

Les corrélations de code sont ensuite intégrées par un respectif intégrateur de code 60, 62 pour fournir des signaux $I_{P1}$, $Q_{P1}$ en sortie du premier corrélateur 40 et $I_{P2}$, $Q_{P2}$ en sortie du second corrélateur 42.

Un discriminateur de phase de porteuse 70 fourni, à partir des signaux $I_{P1}$, $Q_{P1}$ et $I_{P2}$, $Q_{P2}$ en sortie des intégrateurs 60, 62 et après passage dans un correcteur de boucle de porteuse centrale 72, un signal de vitesse de porteuse centrale Vpc entre les deux porteuses des signaux reçus S1 et S2 pour contrôler les respectifs oscillateurs à commande numérique de porteuse de signaux 48, 50.

Un discriminateur de phase de code 74 fourni, à partir des signaux $I_{P1}$, $Q_{P1}$ et $I_{P2}$, $Q_{P2}$ en sortie des intégrateurs 60, 62 et après passage dans un correcteur de boucle de code 76, un signal de vitesse Vcc de sous porteuse entre les deux signaux reçus S1 et S2 pour contrôler les respectifs oscillateurs à commande numérique de code 56, 58.

Les vitesses de porteuse Vpc et de vitesse de code Vcc sont des vitesses linéaires, exprimées par exemple en mètres/seconde.

Pour générer les porteuses locales des voies de corrélation de porteuse, $F_{I1}$, $F_{Q1}$ pour la première voie de corrélation 44 et $F_{I2}$, $F_{Q2}$ pour la seconde 42 on doit tenir compte de la porteuse centrale entre les signaux et de la sous-porteuse, cette sous-porteuse étant l'image des écarts entre chaque porteuse de signal reçu et la porteuse centrale.

Les oscillateurs contrôlés numériquement 48 et 50 de porteuse (NCO p), fournissent à partir du signal de vitesse de porteuse Vpc et des vitesses sous-porteuse ou vitesse de code Vcc, respectivement en sortie du correcteur de boucle de porteuse centrale 72 et du correcteur de boucle de code 76, les deux respectives porteuses locales $F_{I1}$, $F_{Q1}$ pour la première voie de corrélation 44 et $F_{I2}$, $F_{Q2}$ pour la deuxième voie 46. A cet effet, d'une part, l'oscillateur contrôlé numériquement 48 de la voie de corrélation de porteuse 44 du premier circuit corrélateur est piloté par un signal p1 en sortie d'un sommateur Sm1, le sommateur Sm1 effectuant la somme du signal de vitesse de porteuse Vpc plus le signal de vitesse de code Vcc.G1, G1 étant un gain donné par le rapport entre la fréquence de la sous porteuse $F_{SP}$ et la fréquence de la porteuse du premier signal $F_{P1}$, ($G1 = F_{SP}/F_{P1}$) et d'autre part, l'oscillateur contrôlé numériquement

50 de la voie de corrélation de porteuse 46 du second circuit corrélateur est piloté par un signal p2 en sortie d'un sommateur Sm2, le sommateur Sm2 effectuant la somme du signal de vitesse de porteuse Vpc plus le signal de vitesse de code Vcc.(-G2), G2 étant un gain donné par le rapport entre la fréquence de la sous porteuse $F_{SP}$ et la fréquence de la porteuse du second signal $F_{P2}$, (G2 = $F_{SP}$/ $F_{P2}$).

Il est à noter que la fréquence de la sous-porteuse $F_{SP}$ est :

$$F_{SP} = (F_{P1} - F_{P2})/2$$

et la fréquence de la porteuse centrale $F_{pc}$ est :

$$F_{PC} = (F_{P1} + F_{P2})/2 \text{ avec } :$$

$F_{P1}$ : fréquence de porteuse 1
$F_{P2}$ : fréquence de porteuse 2

Les oscillateurs contrôlés numériquement, 56 et 58 de code (NCO c), fournissent, à partir du signal de vitesse Vcc de sous-porteuse, en sortie du correcteur de boucle de code 76, le respectif code local (Lc1, Lc2) pour chaque voie de corrélation code. Dans le cas de la réalisation de la figure 3, la boucle de code est aidée par la boucle de porteuse. A cet effet, les oscillateurs contrôlés numériquement 56, 58 des voies de corrélation de code 52, 54 sont pilotés par un signal p3 en sortie d'un sommateur Sm3 résultant de la somme du signal de vitesse de porteuse Vpc plus le signal de vitesse de code Vcc.

Le discriminateur de phase de porteuse fournie une erreur de phase $\delta\varphi$ telle que :

$$\delta\varphi = \arctan\left(\frac{\mathrm{Im}(Z_{P_1} + Z_{P_2})}{Re(Z_{P_1} + Z_{P_2})}\right) = \arctan\left(\frac{Q_{P1} + Q_{P2}}{I_{P1} + I_{P2}}\right)$$

$Z_{P1}$ et $Z_{P2}$ représentent les signaux cumulés après corrélation par les signaux locaux.
Le discriminateur de phase de code fournie une erreur de phase $\delta\varepsilon$ telle que :

$$\delta\varepsilon = \arctan\left(\frac{\mathrm{Im}(Z_{P_1} / \overline{Z}_{P_2})}{Re(Z_{P_1} / \overline{Z}_{P_2})}\right) = \arctan\left(\frac{I_{P2}Q_{P1} - I_{P1}Q_{P2}}{I_{P1}.I_{P2} + Q_{P1}.Q_{P2}}\right)$$

Cas avec données (voies données) :

dans ce cas l'intégration des échantillons ($I_P$, $Q_P$) se fait sur la durée des bits de données.

Discriminateur de phase de porteuse :

$$\delta\varphi = \arctan\left(\frac{\mathrm{Im}(\varepsilon_1.Z_{P_1} + \varepsilon_2\overline{Z}_{P_2})}{Re(\varepsilon_1.Z_{P_1} + \varepsilon_2.Z_{P_2})}\right) = \arctan\left(\frac{\varepsilon_1.Q_{P_1} + \varepsilon_2.Q_{P_2}}{\varepsilon_1.I_{P_1} + \varepsilon_2.I_{P_2}}\right)$$

avec $\varepsilon_1$ = *signe*($I_{P1}$) $\varepsilon_2$ = *signe*($I_{P2}$)
Discriminateur de phase de code :

$$\bar{\delta\varepsilon} = \arctan\left(\frac{\mathrm{Im}(Z_{P_1} / \overline{Z_{P_2}})}{Re(Z_{\bar{P}_1} / \overline{Z_{P_2}})}\right) = \arctan\left(\frac{I_{\bar{P}_2}Q_{\bar{P}_1} - I_{\bar{P}_1}Q_{P_2}}{I_{P_1}.I_{P_2} + Q_{P_1}.Q_{P_2}}\right)$$

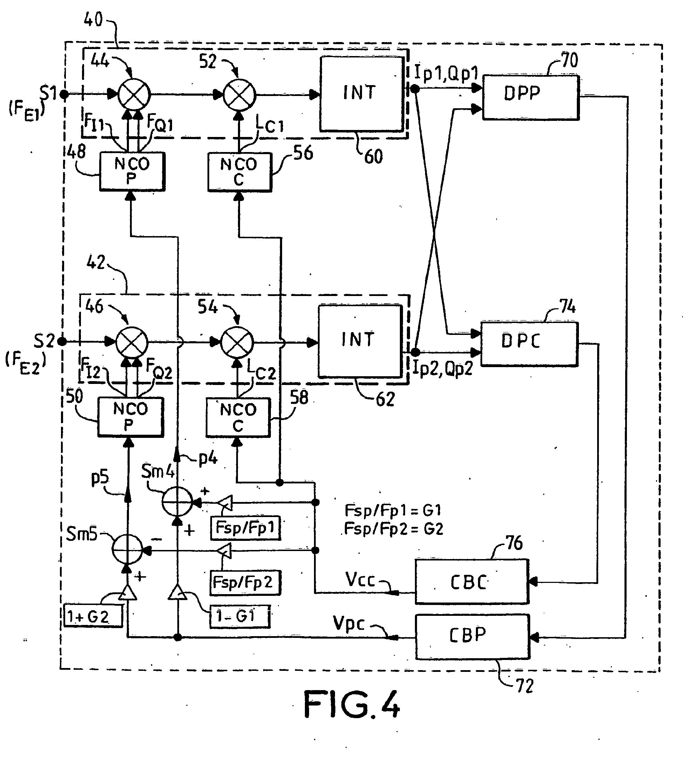

La figure 4 représente une variante du récepteur de la figure 3 selon l'invention. Dans cette variante de la figure 4, la boucle de code n'est pas aidée par la boucle de porteuse.

Le récepteur de la figure 4 comporte le premier circuit corrélateur 40 attaqué par le premier signal reçu S1 à la fréquence $F_{E1}$ et le second circuit corrélateur 42 attaqué par le second signal reçu S2 à la fréquence $F_{E2}$.

Les oscillateurs contrôlés numériquement 48 et 50 de porteuse (NCO p), fournissent à partir du signal de vitesse de porteuse Vpc et des vitesses de code Vcc, respectivement en sortie du correcteur de boucle de porteuse centrale 72 et du correcteur de boucle de code 76, les deux respectives porteuses locales $F_{I1}$, $F_{Q1}$ pour la première voie de corrélation 44 et $F_{I2}$, $F_{Q2}$ pour la deuxième voie 46. A cet effet, d'une part, l'oscillateur contrôlé numériquement 48 de la voie de corrélation de porteuse 44 du premier circuit corrélateur est piloté par un signal p4 en sortie d'un sommateur Sm4, le sommateur Sm4 effectuant la somme du signal de vitesse de porteuse Vpc.(1-G1) plus le signal de vitesse de code Vcc.G1, et d'autre part, l'oscillateur contrôlé numériquement 50 de la voie de corrélation de porteuse 46 du second circuit corrélateur est piloté par un signal p5 en sortie d'un sommateur Sm5, le sommateur Sm5 effectuant la somme du signal de vitesse de porteuse Vpc.(1+G2) plus le signal de vitesse de code Vcc.(-G2).

Il est à noter que la fréquence de la sous-porteuse $F_{SP}$ est :

$$F_{SP} = (F_{P1} - F_{P2})$$

et la fréquence de la porteuse centrale $F_{pc}$ est :

$$F_{PC} = (F_{P1} + F_{P2})/2$$

avec:

$F_{P1}$: fréquence de porteuse 1
$F_{P2}$: fréquence de porteuse 2

Les oscillateurs contrôlés numériquement, 56 et 58 de code (NCO c), fournissent, à partir du signal de vitesse Vcc de sous-porteuse, en sortie du correcteur de boucle de code 76, le respectif code local (Lc1, Lc2) pour chaque voie de code et les codes locaux de désétalement.

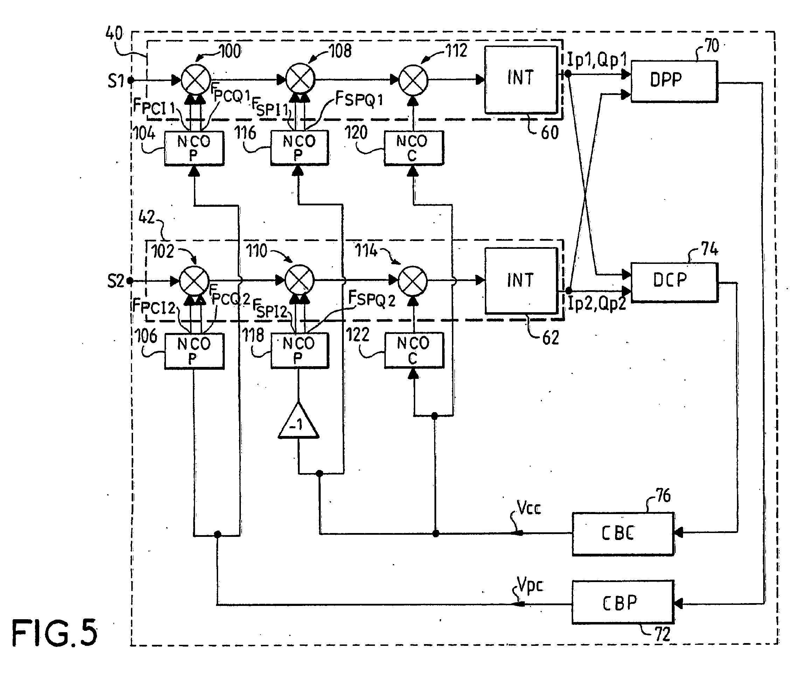

La figure 5 représente une première autre réalisation du récepteur selon l'invention ayant un dispositif comportant trois oscillateurs contrôlés numériquement par voie de signal S1 et S2. Dans cette première réalisation à trois oscillateurs, les voies de corrélation de code ne sont pas aidées par la vitesse porteuse Vpc.

Le récepteur de la figure 5 comporte le premier circuit corrélateur 40 attaqué par un premier signal reçu S1 à la fréquence $F_{E1}$ et le second circuit corrélateur 42 attaqué par le second signal reçu S2 à la fréquence $F_{E2}$.

Chaque circuit corrélateur 40, 42 comporte un voie de corrélation 100, 102 en phase et en quadrature entre son respectif signal reçu S1, S2 et deux respectives porteuses locales à la fréquence centrale, $F_{PCI1}$, $F_{PCQ1}$ pour la première voie de corrélation 100 et $F_{PCI2}$, $F_{PCQ2}$ pour la deuxième voie 102, ces porteuses locales en quadrature étant générées par un respectif oscillateur à commande numérique de porteuse centrale 104, 106 contrôlé par un signal de vitesse de porteuse centrale Vpc en sortie du correcteur de boucle de porteuse 72.

Les sorties des voies de corrélation de porteuse centrale sont fournies à des voies de corrélation de sous-porteuse 108, 110 puis aux voies de corrélation de code 112, 114. Les voies de corrélation de sous-porteuse 108, 110 effectuent la corrélation complexe entre les sorties des voies de corrélation de porteuse centrale en phase et en quadrature et des respectives porteuses locales en phase et en quadrature $F_{SPI1}$, $F_{SPQ1}$ pour la première voie de corrélation et $F_{SPI2}$, $F_{SPQ2}$ pour la deuxième voie de corrélation. Les respectives sous-porteuses locales $F_{SPI1}$, $F_{SPQ1}$, $F_{SPI2}$, $F_{SPQ2}$ sont générées, les premières par un premier oscillateur à commande numérique de sous-porteuse 116 piloté par le signal de vitesse de code Vcc en sortie du correcteur de boucle de code 76 et la seconde par un second oscillateur à commande numérique de sous-porteuse 118 piloté par le signal de vitesse de code Vcc multiplie par -1, en sortie du correcteur de boucle de code 76.

Les signaux en sortie des voies de corrélation de sous-porteuse sont ensuite corrélés dans les respectives voies de corrélation de code 112, 114 avec le code local fourni par un respectif générateur numérique de code local 120, 122 piloté par le signal de vitesse de code Vcc.

Comme dans le récepteur de la figure 3, les corrélations de code sont ensuite intégrées par le respectif intégrateur de code 60, 62 pour fournir des signaux $I_{P1}$, $Q_{P1}$ en sortie du premier corrélateur 40 $I_{P2}$, $Q_{P2}$ en sortie du second corrélateur 42.

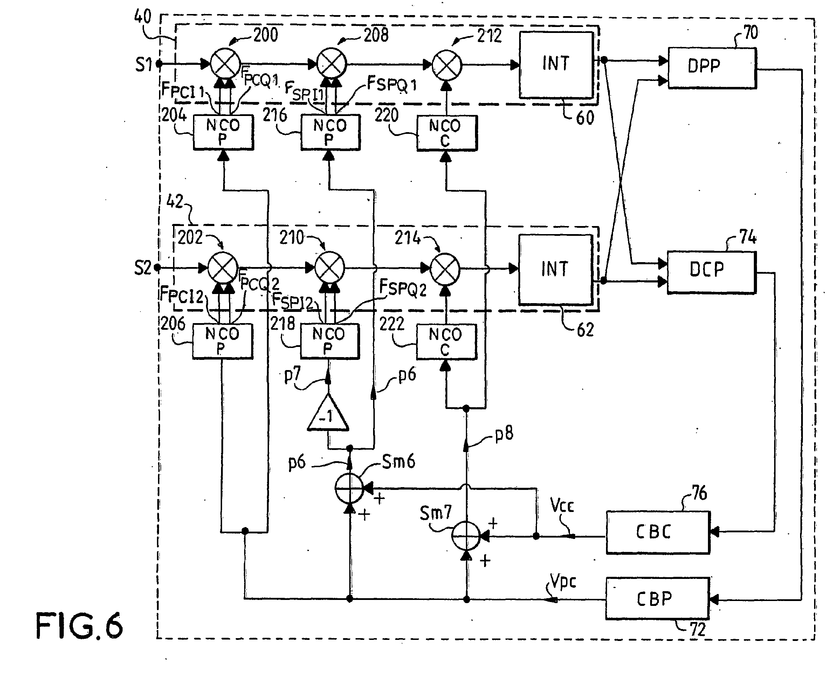

La figure 6 représente une variante du récepteur de la figure 5 selon l'invention, comportant trois oscillateurs contrôlés numériquement par voie de signal S1 et S2. Dans cette réalisation, les voies de corrélation de code et les voies de corrélation de sous-porteuse sont aidées par la vitesse de porteuse Vcc.

Le récepteur de la figure 6 comporte le premier circuit corrélateur 40 attaqué par un premier signal reçu S1 à la fréquence $F_{E1}$ et le second circuit corrélateur 42 attaqué par le second signal reçu S2 à la fréquence $F_{E2}$.

Chaque circuit corrélateur comporte un voie de corrélation 200, 202 en phase et en quadrature entre son respectif signal reçu S1, S2 et deux respectives porteuses locales à la fréquence centrale, $F_{PCI1}$, $F_{PCQ1}$ pour la première voie de corrélation 200 et $F_{PCI2}$, $F_{PCQ2}$ pour la deuxième voie 202, ces porteuses locales en quadrature étant générées par un respectif oscillateur à commande numérique de porteuse centrale 204, 206 contrôlé par un signal de vitesse de porteuse centrale Vpc en sortie du correcteur de boucle de porteuse 72.

Les sorties des voies de corrélation de porteuse centrale sont fournies à des voies de corrélation de sous-porteuse 208, 210 puis aux voies de corrélation de code 212, 214. Les voies de corrélation de sous-porteuse 208, 210 effectuent la corrélation complexe entre les sorties des voies de corrélation de porteuse centrale et des respectives porteuses locales en phase et en quadrature $F_{SPI1}$, $F_{SPQ1}$ pour la première voie de corrélation et $F_{SPI2}$, $F_{SPQ2}$ pour la deuxième voie de corrélation. Les respectives sous-porteuses locales $F_{SPI1}$, $F_{SPQ1}$ et $F_{SPI2}$ $F_{SPQ1}$ de corrélation de sous-porteuse sont générées, les premières, par un premier oscillateur à commande numérique de sous-porteuse 216 piloté par un signal p6 en sortie d'un sommateur Sm6, le signal p6 résultant de la somme du signal de vitesse de porteuse Vpc avec le signal de vitesse de code Vcc, les secondes, par un second oscillateur à commande numérique de sous-porteuse 218 piloté par un signal p7 résultant du signal p6, en sortie du sommateur Sm6, multiplié par -1.

Les signaux en sortie des voies de corrélation de sous-porteuse sont ensuite corrélés dans les respectives voies de corrélation de code 212, 214 avec le code local fourni par un respectif générateur numérique de code local 220, 222 piloté par un signal p8 en sortie d'un sommateur Sm7, le signal p8 résultant de la somme du signal de vitesse de porteuse Vpc avec le signal de vitesse de code Vcc.

Comme dans le récepteur de la figure 3, les corrélations de code sont ensuite intégrées par le respectif intégrateur de code 60, 62 pour fournir des signaux $I_{P1}$, $Q_{P1}$ en sortie du premier corrélateur 40 $I_{P2}$, $Q_{P2}$ en sortie du second corrélateur 42.

Dans les variantes de la figure 5 et 6, on pourra avantageusement utiliser un seul générateur de porteuse centrale locale pour les deux circuits de corrélation sur S1 et S2, ces porteuses locales étant identiques.

Dans les variantes de la figure 5 et 6, on pourra aussi avantageusement utiliser un seul générateur de sous-porteuse locale pour les deux circuits de corrélation sur S1 et S2, ces porteuses locales étant les conjugués l'une de l'autre (au sens des nombres complexes).

Nous allons par la suite décrire l'initialisation de la boucle du récepteur selon l'invention :

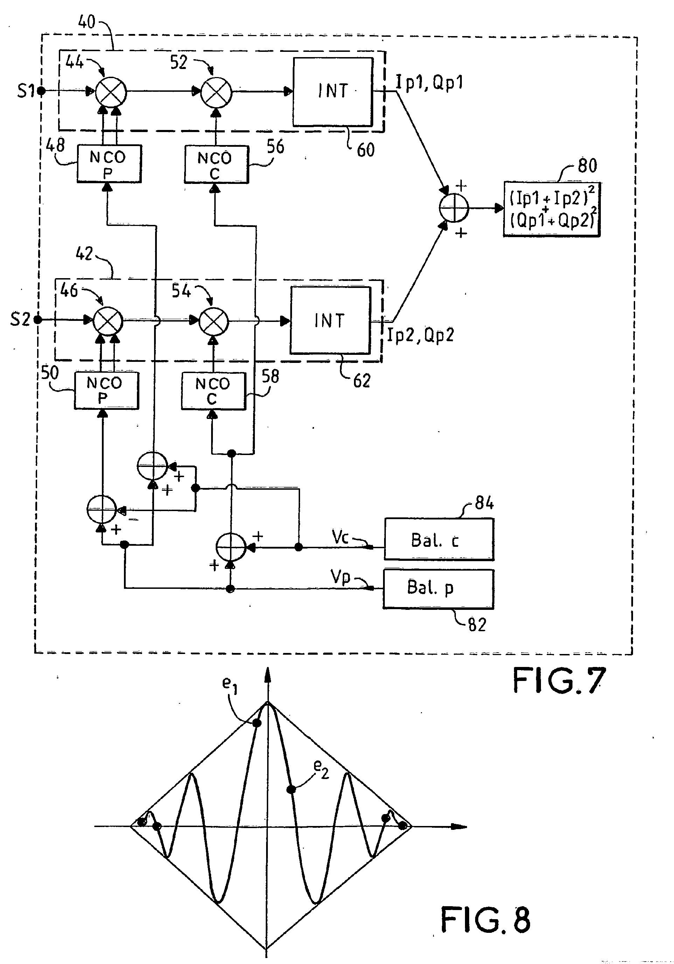

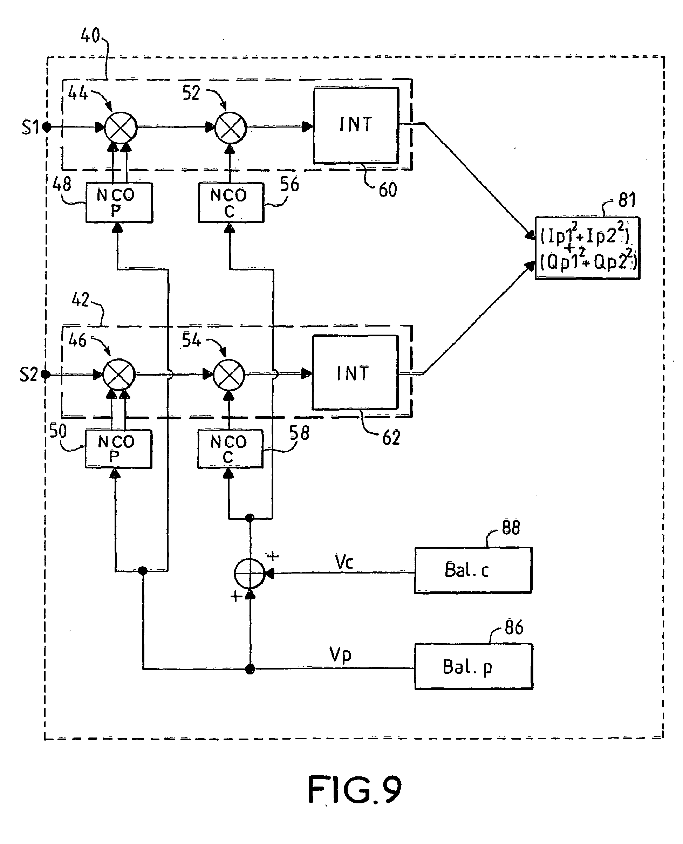

Premier cas : les signaux reçus S1 et S2 sont synchrones en code et en porteuse. C'est le cas où les deux signaux sont séparés, après conversion en fréquence basse et échantillonnage d'un signal large bande contenant ces deux signaux, par un filtrage numérique. Les figures 7 et 9 montrent des synoptiques du récepteur lors de son initialisation. On effectue la recherche de l'énergie de manière synchrone entre les deux signaux suivant deux possibilités. La recherche de l'énergie s'effectue à partir des signaux $I_{P1}$, $Q_{P1}$ et $I_{P2}$, $Q_{P2}$ en sortie des intégrateurs 60, 62 selon les deux possibilités :

Première possibilité (voir figure 7) :

$$\text{Energie} = (I_{P1} + I_{P2})^2 + (Q_{P1} + Q_{P2})^2 \quad \text{(bloc 80, figure 7)}$$

On balaye les hypothèses de Doppler sur la porteuse centrale (bloc82) et les hypothèses temps (bloc 84) à la fois sur les codes et sur les écarts de phase entre les porteuses, conformément au principe de l'invention.

Dans ce cas, la fonction d'autocorrélation résultante, représentée à la figure 8, présente des ambiguïtés à cause de la multiplicité des pics, qu'il faut résoudre en choisissant les pics de puissance maximale.

Le risque pendant la recherche est de tomber sur un zéro de la fonction d'autocorrélation et de ne pas trouver d'énergie, le balayage devra se faire avec deux hypothèses temps en parallèle, écarté de la demi-largeur e1, e2 d'un pic, sur la fonction d'auto-corrélation (figure 8) de manière à n'avoir jamais deux zéros simultanément. Une fois que l'énergie a été trouvée sur les hypothèses de Doppler et de temps on affine la recherche pour déterminer le pic principal puis on ferme les boucles de porteuse et de temps en appliquant les discriminateurs 70, 74 et les correcteurs de boucles 72, 76, tels que représentés à la figure 3 du récepteur selon l'invention. Deuxième possibilité (voir figure 9) :

$$\text{Energie} = (I_{P1}^2 + Q_{P1}^2) + (I_{P2}^2 + Q_{P2}^2) \text{ (bloc 81, figure 9)}$$

On balaye les mêmes hypothèses de Doppler sur chaque porteuse (bloc 86) et les mêmes hypothèses de temps (bloc 88) sur les deux codes, en éliminant la phase de la porteuse de chaque voie en faisant la somme quadratique des deux voies, afin de ne pas être perturbé par les écarts de phase entre porteuses. Dans ce cas, la fonction d'autocorrélation résultante n'est plus ambiguë et ne nécessite plus un balayage parallèle.

Une fois que l'énergie a été trouvée sur une hypothèse de Doppler et de temps, on affine la recherche pour avoir une estimation précise des positions des codes et du Doppler, puis on ferme la boucle de porteuse et de temps en appliquant les discriminateurs 70, 74 et les correcteurs de boucles 72, 76 et en changeant la manière d'appliquer les commandes de vitesse en sortie des correcteurs de boucle de porteuse et de code, conformément au principe de l'invention.

Deuxième cas : les signaux reçus sont désynchronisés

a) Cas où les deux signaux sont séparés avant l'échantillonnage, par un filtrage analogique :

Le désappairage des composants analogiques peut induire un déphasage entre les deux signaux et une différence d'amplitude. Dans ce cas, l'initialisation se fait en :

- effectuant l'acquisition des signaux indépendamment, puis en faisant converger les boucles de porteuse et de code ;
- en identifiant les amplitudes des signaux sur les voies ponctuelles ;
- en appliquant les discriminateurs de code et de porteuse de l'invention, après avoir normalisé les échantillons complexes $Z_{P1}$ et $Z_{P2}$ par leurs amplitudes respectives ;
- et en changeant la manière d'appliquer les commandes de vitesse en sortie des correcteurs de boucle de porteuse et de code, conformément au principe de l'invention.

Dans une variante du récepteur de positionnement par satellite selon l'invention, on utilise un discriminateur étendu pour la boucle de porteuse(de type DBPSK) appliqué à la somme des échantillons cumulés des deux voies pour les applications à forte dynamique.

Le récepteur selon l'invention trouve son utilisation dans toute application de positionnement, basée sur la technique de transmission d'un signal de spectre étalé par un code d'étalement, réalisée à partir de deux signaux émis par la même source et de manière synchrone sur deux fréquences distinctes et proches. Par exemple, dans le cas de GALILEO, l'utilisation des signaux disponibles dans les bandes de fréquences E1 et E

## Revendications

1. Récepteur de localisation de position par satellite destiné à effectuer un traitement combiné d'un premier (S1) et un second (S2) signaux radioélectriques reçus, séparés en fréquence, **caractérisé en ce qu'**il comporte :

- un premier (40) et un second (42) circuits corrélateurs recevant respectivement le premier et le second signaux reçus, chaque corrélateur ayant une voie de corrélation en phase et en quadrature (44, 46) entre le respectif signal reçu et une respective porteuse locale ($F_{I1}$, $F_{Q1}$ et $F_{I2}$, $F_{Q2}$), une voie de corrélation de code (52, 54) entre le signal reçu corrélé en I et Q et un respectif code local ($L_{C1}$, $L_{C2}$), un intégrateur (60, 62) par voie de corrélation de code, le récepteur comportant en outre :
- un discriminateur de phase de porteuse centrale (70) entre les deux porteuses des signaux reçus, le discriminateur de phase fournissant, à partir des signaux Ip1 et Qp1 et Ip2 et Qp2 en sortie des deux intégrateurs et après correction de boucle de phase (76), un signal de vitesse de porteuse centrale (Vpc) ;
- un dispositif fournissant, à partir de la vitesse de porteuse centrale et d'une vitesse de sous-porteuse (Vpc) les respectives porteuses locales ($F_{I1}$, $F_{Q1}$ et $F_{I2}$, $F_{Q2}$) pour les voies de corrélation de porteuse, cette sous-porteuse étant l'image des écarts entre chaque porteuse de signal reçu et la porteuse centrale ;

- un discriminateur de phase de code (74) fournissant, à partir des signaux Ip1 et Qp1 et Ip2 et Qp2 en sortie des intégrateurs (60, 62) et après une correction de boucle de code (76), le signal de vitesse de sous-porteuse (Vcc) pour les voies de corrélation de porteuse et de code ;

- un oscillateur contrôlé numériquement (56, 58), par voie de corrélation de code, l'oscillateur fournissant, à partir de la vitesse de sous-porteuse (ou vitesse de code), le respectif code local pour chaque voie de code.

**2.** Récepteur de localisation selon la revendication 1, **caractérisé en ce que** la fonction de corrélation de code résultante du traitement, selon l'invention, des signaux reçus est le produit entre l'enveloppe de la fonction de corrélation du code seul (Cs) et une fonction sinusoïdale (Fs) de fréquence égale à l'écart de fréquence entre les centres des bandes des signaux reçus.

**3.** Récepteur de localisation selon les revendications 1 ou 2, **caractérisé en ce qu'**il comporte une seule boucle de porteuse et une seule boucle de code pour traiter les deux signaux reçus (S1, S2), la boucle de porteuse asservissant la phase de la porteuse centrale des signaux locaux avec la phase de la porteuse centrale des signaux reçus, la boucle de code ou boucle de sous porteuse asservissant la phase de la sous porteuse locale, image de l'écart de phase entre les porteuses des deux signaux locaux, avec la phase de la sous-porteuse reçue, image de l'écart de phase entre les deux signaux reçus, et la position des codes locaux avec les codes reçus.

**4.** Récepteur de localisation selon les revendications 1 à 3, **caractérisé en ce que**, pour générer les porteuses locales des voies de corrélation de porteuse, ($F_{I1}$, $F_{Q1}$) pour la première voie de corrélation (44) et ($F_{I2}$, $F_{Q2}$) pour la seconde (42) on doit tenir compte de la porteuse centrale entre les signaux et de la sous-porteuse, cette sous-porteuse étant l'image des écarts entre chaque porteuse de signal reçu et la porteuse centrale, les oscillateurs contrôlés numériquement (48, 50) de porteuse (NCO p), fournissant à partir du signal de vitesse de porteuse (Vpc) et des vitesses de code (Vcc), respectivement en sortie du correcteur de boucle de porteuse centrale (72) et du correcteur de boucle de code (76), les deux respectives porteuses locales ($F_{I1}$, $F_{Q1}$) pour la première voie de corrélation (44) et ($F_{I2}$, $F_{Q2}$) pour la deuxième voie (46).

**5.** Récepteur de localisation selon la revendication 4, **caractérisé en ce que**, d'une part, l'oscillateur contrôlé numériquement (48) de la voie de corrélation de porteuse (44) du premier circuit corrélateur est piloté par un signal p1 en sortie d'un sommateur Sm1, le sommateur Sm1 effectuant la somme du signal de vitesse de porteuse Vpc plus le signal de vitesse de code Vcc.G1, G1 étant un gain donné par le rapport entre la fréquence de la sous porteuse $F_{SP}$ et la fréquence de la porteuse du premier signal $F_{P1}$, (G1 = $F_{SP}$/ $F_{P1}$) et d'autre part, l'oscillateur contrôlé numériquement (50) de la voie de corrélation de porteuse (46) du second circuit corrélateur est piloté par un signal p2 en sortie d'un sommateur Sm2, le sommateur Sm2 effectuant la somme du signal de vitesse de porteuse Vpc plus le signal de vitesse de code Vcc.(-G2), G2 étant un gain donné par le rapport entre la fréquence de la sous porteuse $F_{SP}$ et la fréquence de la porteuse du second signal $F_{P2}$, (G2 = $F_{SP}$/ $F_{P2}$), la fréquence de la sous-porteuse $F_{SP}$ étant :

$$F_{SP} = (F_{P1} - F_{P2})/2$$

et la fréquence de la porteuse centrale $F_{pc}$ étant :

$$F_{PC} = (F_{P1} + F_{P2})/2 \text{ avec } :$$

$F_{P1}$ : fréquence de porteuse 1
$F_{P2}$ : fréquence de porteuse 2

**6.** Récepteur de localisation selon la revendication 5, **caractérisé en ce que** les oscillateurs contrôlés numériquement (56, 58) de code (NCO c) fournissent, à partir du signal de vitesse Vcc de sous-porteuse, en sortie du correcteur de boucle de code 76, le respectif code local (Lc1, Lc2) pour chaque voie de corrélation de code.

**7.** Récepteur de localisation selon les revendications 5 ou 6, **caractérisé en ce que** la boucle de code est aidée par la boucle de porteuse, les oscillateurs contrôlés numériquement (56, 58) des voies de corrélation de code (52, 54) étant pilotés par un signal p3 en sortie d'un sommateur Sm3 résultant de la somme du signal de vitesse de porteuse (Vpc) au signal de vitesse de code (Vcc).

**8.** Récepteur de localisation selon les revendications 1 à 7, **caractérisé en ce que** le discriminateur de phase de porteuse (70) fournit une erreur de phase $\delta\varphi$ telle que :

$$\delta\varphi = \arctan\left(\frac{\operatorname{Im}(Z_{P1} + Z_{P2})}{Re(Z_{P1} + Z_{P2})}\right) = \arctan\left(\frac{Q_{P1} + Q_{P2}}{I_{P1} + I_{P2}}\right)$$

$Z_{P1}$ et $Z_{P2}$ étant les échantillons complexes du signal
et **en ce que** le discriminateur de phase de code (74) fournit une erreur de phase $\delta\varepsilon$ telle que :

$$\delta\varepsilon = \arctan\left(\frac{\operatorname{Im}(Z_{P1} / \overline{Z}_{P2})}{Re(Z_{P1} / \overline{Z}_{P2})}\right) = \arctan\left(\frac{I_{P2} Q_{P1} - I_{P1} Q_{P2}}{I_{P1}.I_{P2} + Q_{P1}.Q_{P2}}\right)$$

**9.** Récepteur de localisation selon les revendications 1 à 7, **caractérisé en ce que**, avec des données, l'intégration des échantillons
($I_P$, $Q_P$) se fait sur la durée des bits de données, le discriminateur de phase de porteuse fournissant une erreur de phase :

$$\delta\varphi = \arctan\left(\frac{\operatorname{Im}(\varepsilon_1.Z_{P1} + \varepsilon_2 Z_{P2})}{Re(\varepsilon_1.Z_{P1} + \varepsilon_2.Z_{P2})}\right) = \arctan\left(\frac{\varepsilon_1.Q_{P1} + \varepsilon_2.Q_{P2}}{\varepsilon_1.I_{P1} + \varepsilon_2.I_{P2}}\right)$$

avec $\varepsilon_1$ = *signe*($I_{P1}$) $\varepsilon_2$ = *signe*($I_{P2}$)
et **en ce que** le discriminateur de phase de code fournit une erreur de phase de code

$$\delta\varepsilon = \arctan\left(\frac{\operatorname{Im}(Z_{P1} / \overline{Z}_{P2})}{Re(Z_{P1} / \overline{Z}_{P2})}\right) = \arctan\left(\frac{I_{P2} Q_{P1} - I_{P1} Q_{P2}}{I_{P1}.I_{P2} + Q_{P1}.Q_{P2}}\right)$$

**10.** Récepteur de localisation selon les revendications 1 à 3, **caractérisé en ce que** les oscillateurs contrôlés numériquement (48, 50) de porteuse (NCO p), fournissent à partir du signal de vitesse de porteuse Vpc et des vitesses de code Vcc, respectivement en sortie du correcteur de boucle de porteuse centrale (72) et du correcteur de boucle de code (76), les deux respectives porteuses locales ($F_{I1}$, $F_{Q1}$) pour la première voie de corrélation (44) et ($F_{I2}$, $F_{Q2}$) pour la deuxième voie (46) et **en ce que**, d'une part, l'oscillateur contrôlé numériquement (48) de la voie de corrélation de porteuse (44) du premier circuit corrélateur est piloté par un signal p4 en sortie d'un sommateur Sm4, le sommateur Sm4 effectuant la somme du signal de vitesse de porteuse Vpc.(1-G1), plus le signal de vitesse de code Vcc.G1, et d'autre part, l'oscillateur contrôlé numériquement (50) de la voie de corrélation de porteuse (46) du second circuit corrélateur est piloté par un signal p5 en sortie d'un sommateur Sm5, le sommateur Sm5 effectuant la somme du signal de vitesse de porteuse Vpc.(1+G2) plus le signal de vitesse de code Vcc.(-G2), la fréquence de la sous-porteuse $F_{SP}$ étant :

$$F_{SP} = (F_{P1} - F_{P2})$$

et la fréquence de la porteuse centrale $F_{pc}$ étant :

$$F_{PC} = (\bar{F}_{P1} + \bar{F}_{P2})/2$$

avec:

$F_{P1}$:fréquence de porteuse 1
$F_{P2}$:fréquence de porteuse 2 .

**11.** Récepteur de localisation selon la revendication 10, **caractérisé en ce que** les oscillateurs contrôlés numériquement (56, 58) de code (NCO c), fournissent, à partir du signal de vitesse Vcc de sous-porteuse, en sortie du correcteur de boucle de code (76), le respectif code local (Lc1, Lc2) pour chaque voie de code et les codes locaux de désétalement.

**12.** Récepteur de localisation selon les revendications 1 ou 2, **caractérisé en ce que** le dispositif comporte trois oscillateurs contrôlés numériquement par voie de signal S1 et S2.

**13.** Récepteur de localisation selon les revendications 12, **caractérisé en que** chaque circuit corrélateur (40, 42) comporte un voie de corrélation (100, 102, 200, 202) en phase et en quadrature entre son respectif signal reçu S1, S2 et deux respectives porteuses locales à la fréquence centrale, ($F_{PCI1}$, $F_{PCQ1}$) pour la première voie de corrélation (100, 102) et ($F_{PCI2}$, $F_{PCQ2}$) pour la deuxième voie (102, 202), ces porteuses locales en quadrature étant générées par un respectif oscillateur à commande numérique de porteuse centrale (104, 106, 204, 206) contrôlé par un signal de vitesse de porteuse centrale Vpc en sortie du correcteur de boucle de porteuse (72) et en ce que les sorties de ces voies de corrélation de porteuse centrale sont fournies à des voies de corrélation de sous-porteuse (108, 110, 208, 210) puis aux voies de corrélation de code (112, 212, 114, 214), en ce que les voies de corrélation de sous-porteuse (108, 110, 208, 210) effectuent la corrélation complexe entre les sorties de ces voies de corrélation de porteuse centrale et des respectives sous-porteuse locales en phase et en quadrature ($F_{SPI1}$, $F_{SPQ1}$) et ($F_{SPI2}$, $F_{SPQ2}$).

**14.** Récepteur de localisation selon la revendication 13, **caractérisé en que** les respectives sous-porteuses locales en phase et en quadrature ($F_{SPI1}$, $F_{SPQ1}$) et ($F_{SPI2}$, $F_{SPQ2}$) sont générées, les premières par un premier oscillateur à commande numérique de sous-porteuse (116) piloté par le signal de vitesse de code Vcc en sortie du correcteur de boucle de code (76) et les secondes par un second oscillateur à commande numérique de sous-porteuse (118) piloté par le signal de vitesse de code Vcc multiplie par -1, en sortie du correcteur de boucle de code (76).

**15.** Récepteur de localisation selon la revendication 14, **caractérisé en que** les signaux en sortie des voies de corrélation de sous-porteuse sont ensuite corrélés dans les respectives voies de corrélation de code (112, 114) avec le code local fourni par un respectif générateur numérique de code local (120, 122) piloté par le signal de vitesse de code Vcc.

**16.** Récepteur de localisation selon la revendication 13, **caractérisé en que** les respectives sous-porteuses locales ($F_{SPI1}$, $F_{SPQ1}$ et $F_{SPI2}$, $F_{SPQ2}$) de corrélation de sous-porteuse sont générées, les premières, par un premier oscillateur à commande numérique de sous-porteuse (216) piloté par un signal p6 en sortie d'un sommateur Sm6, le signal p6 résultant de la somme du signal de vitesse de porteuse Vpc avec le signal de vitesse de code Vcc, les secondes, par un second oscillateur à commande numérique de sous-porteuse (218) piloté par un signal p7 résultant du signal p6, en sortie du sommateur S6, multiplié par -1, et en ce que les signaux en sortie des voies de corrélation de sous-porteuse sont ensuite corrélés dans les respectives voies de corrélation de code (212, 214) avec le code local fourni par un respectif générateur numérique de code local (220, 222) piloté par un signal p8 en sortie d'un sommateur Sm7, le signal p8 résultant de la somme du signal de vitesse de porteuse Vpc avec le signal de vitesse de code Vcc.

**17.** Récepteur de localisation selon les revendications 1 à 16, **caractérisé en ce que**, lorsque les signaux reçus (S1, S2) sont synchrones en code et en porteuse, on effectue la recherche de l'énergie de manière synchrone entre les deux signaux, la recherche de l'énergie s'effectuant à partir des signaux $I_{P1}$, $Q_{P1}$ et $I_{P2}$, $Q_{P2}$ en sortie des intégrateurs (60, 62) en effectuant le calcul :

Energie = $(I_{P1} + I_{P2})^2 + (Q_{P1} + Q_{P2})^2$ et **en ce qu'**on balaye les hypothèses de Doppler sur la porteuse centrale (82) et les hypothèses temps (84) à la fois sur les codes et sur les écarts de phase entre les porteuses, conformément au principe de l'invention et **en ce qu'**on choisit les pics de puissance maximale de la fonction d'auto-corrélation.

**18.** Récepteur de localisation selon la revendication 17, **caractérisé en ce que** le balayage s'effectue avec deux hypothèses temps en parallèle, écarté de la demi largeur (e1, e2) d'un pic, sur la fonction d'auto-corrélation, de manière à n'avoir jamais deux zéros simultanément, et **en ce qu'**une fois que l'énergie a été trouvée sur les hypothèses de Doppler et de temps, on affine la recherche pour déterminer le pic principal, puis on ferme les boucles de porteuse et de temps en appliquant les discriminateurs (70, 74) et les correcteurs de boucles (72, 76) du récepteur selon l'invention.

**19.** Récepteur de localisation selon les revendications 1 à 16, **caractérisé en ce que**, lorsque les signaux reçus (S1, S2) sont synchrones en code et en porteuse, on effectue la recherche de l'énergie de manière synchrone entre les deux signaux, la recherche de l'énergie s'effectuant à partir des signaux $I_{P1}$, $Q_{P1}$ et $I_{P2}$, $Q_{P2}$ en sortie des intégrateurs (60, 62) en effectuant le calcul :

Energie = $(I_{P1}^2 + Q_{P1}^2) + (I_{P2}^2 + Q_{P2}^2)$ et **en ce qu'**on balaye les mêmes hypothèses de Doppler (et de phase) sur chaque porteuse (86) et les mêmes hypothèses de temps (88) sur les deux codes, en éliminant la phase de la porteuse de chaque voie en faisant la somme quadratique des deux voies, la fonction d'auto-corrélation résultante n'étant plus ambiguë et ne nécessitant plus un balayage parallèle.

**20.** Récepteur de localisation selon la revendication 19, **caractérisé en ce qu'**une fois que l'énergie a été trouvée sur une hypothèse de Doppler et de temps, on affine la recherche pour avoir une estimation précise des positions des codes et du Doppler, puis on ferme la boucle de porteuse et de temps en appliquant les discriminateurs (70, 74) et les correcteurs de boucles (72, 76) et en changeant la manière d'appliquer les commandes de vitesse en sortie des correcteurs de boucle de porteuse (70) et de code (72), conformément au principe de l'invention.

**21.** Récepteur de localisation selon les revendications 1 à 18, **caractérisé en ce que** lorsque les signaux reçus (S1, S2) sont désynchronisés, l'initialisation du récepteur se fait :

- en effectuant l'acquisition des signaux indépendamment, puis en faisant converger les boucles de porteuse et de code ;
- en identifiant les amplitudes des signaux sur les voies ponctuelles ;
- en appliquant les discriminateurs de code et de porteuse de l'invention, après avoir normalisé les échantillons complexes $Z_{P1}$ et $Z_{P2}$ par leurs amplitudes respectives ;
- et en changeant la manière d'appliquer les commandes de vitesse en sortie des correcteurs de boucle de porteuse(72) et de code (76), conformément au principe de l'invention.

**Claims**

**1.** A satellite position pinpointing receiver intended to carry out combined processing of a first received radio signal (S1) and a second received radio signal (S2) that differ in frequency, **characterized in that** it comprises:

- a first correlator circuit (40) and a second correlator circuit (42) receiving the first and second received signals respectively, each correlator having a correlation channel (44, 46) for in-phase and quadrature correlation between the respective received signal and a respective local carrier ($F_{I1}$, $F_{Q1}$ and $F_{I2}$, $F_{Q2}$), a code correlation channel (52, 54) for correlation between the I- and Q-correlated received signal and a respective local code ($L_{C1}$, $L_{C2}$), and a code correlation channel integrator (60, 62), the receiver furthermore comprising:
- a central-carrier phase discriminator (70) for discriminating between the two carriers of the received signals, the phase discriminator delivering, on the basis of the signals Ip1, Qp1 and Ip2, Qp2 output by the two integrators and after phase loop correction (76), a central-carrier speed signal (Vpc);
- a device that delivers, on the basis of the central-carrier speed and of a subcarrier speed (Vpc), the respective local carriers ($F_{I1}$, $F_{Q1}$ and $F_{I2}$, $F_{Q2}$) for the carrier correlation channels, this subcarrier being the image of the differences between each received-signal carrier and the central carrier;
- a code phase discriminator (74) that delivers, on the basis of the signals Ip1, Qp1 and Ip2, Qp2 output by the integrators (60, 62) and after a code loop correction (76), the subcarrier speed signal (Vcc) for the carrier correlation and code correlation channels; and
- a numerically controlled oscillator (56, 58) for each code correlation channel, the oscillator delivering, on the basis of the subcarrier speed (or code speed), the respective local code for each code channel.

2. The pinpointing receiver as claimed in claim 1, **characterized in that** the code correlation function resulting from the processing, according to the invention, of the received signals is the envelope of the code correlation function alone (Cs) multiplied by a sinusoidal frequency function (Fs) equal to the frequency difference between the centers of the bands of the received signals.

3. The pinpointing receiver as claimed in either of claims 1 and 2, **characterized in that** it includes a single carrier loop and a single code loop for processing the two received signals (S1, S2), the carrier loop slaving the phase of the central carrier for the local signals to the phase of the central carrier for the received signals and the code loop or subcarrier loop slaving the phase of the local subcarrier, which is the image of the phase difference between the carriers for the two local signals, to the phase of the received subcarrier, which is the image of the phase difference between the two received signals, and the position of the local codes to the received codes.

4. The pinpointing receiver as claimed in claims 1 to 3, **characterized in that**, in order to generate the local carriers of the carrier correlation channel, $(F_{I1}, F_{Q1})$ in the case of the first correlation channel (44) and $(F_{I2}, F_{Q2})$ in the case of the second correlation channel (46), it is necessary to take account of the central carrier between the signals and of the subcarrier, this subcarrier being the image of the differences between each received-signal carrier and the central carrier, the carrier numerically controlled oscillators (NCO p) (48, 50) delivering, on the basis of the carrier speed signal (Vpc) and of the code speeds (Vcc), output respectively by the central-carrier loop corrector (72) and the code loop corrector (76), the two respective local carriers $(F_{I1}, F_{Q1})$ in the case of the first correlation channel (44) and $(F_{I2}, F_{Q2})$ in the case of the second correlation channel (46).

5. The pinpointing receiver as claimed in claim 4, **characterized in that**, on the one hand, the numerically controlled oscillator (48) of the carrier correlation channel (44) of the first correlator circuit is controlled by a signal p1 output by a summer Sm1, the summer Sm1 taking the sum of the carrier speed signal Vpc plus the code speed signal Vcc.G1, where G1 is a gain given by the ratio of the subcarrier frequency $F_{SP}$ to the carrier frequency $F_{P1}$ of the first signal $(G1 = F_{SP}/F_{P1})$ and, on the other hand, the numerically controlled oscillator (50) of the carrier correlation channel (46) of the second correlator circuit is controlled by a signal p2 output by a summer Sm2, the summer Sm2 taking the sum of the carrier speed signal Vpc plus the code speed signal Vcc.(-G2), where G2 is a gain given by the ratio of the subcarrier frequency $F_{SP}$ to the carrier frequency $F_{P2}$ of the second signal $(G2 = F_{SP}/F_{P2})$, the subcarrier frequency $F_{SP}$ being:

$$F_{SP} = (F_{P1} - F_{P2})/2$$

and the central carrier frequency $F_{pc}$ being:

$$F_{pc} = (F_{P1} + F_{P2})/2$$

where $F_{P1}$ is the frequency of the carrier 1 and $F_{P2}$ is the frequency of carrier 2.

6. The pinpointing receiver as claimed in claim 5, **characterized in that** the code numerically controlled oscillators (NCO c) (56, 58) deliver, on the basis of the subcarrier speed signal Vcc output by the code loop corrector 76, the respective local code (Lc1, Lc2) for each code correlation channel.

7. The pinpointing receiver as claimed in either of claims 5 and 6, **characterized in that** the code loop is aided by the carrier loop, the numerically controlled oscillators (56, 58) of the code correlation channels (52, 54) being controlled by a signal p3 output by a summer Sm3 resulting from the sum of the carrier speed signal (Vpc) plus the code speed signal (Vcc).

8. The pinpointing receiver as claimed in claims 1 to 7, **characterized in that** the carrier phase discriminator (70) delivers a phase error $\delta\varphi$ *such that:*

$$\delta\varphi = \arctan\left(\frac{\operatorname{Im}(Z_{P1} + Z_{P2})}{\operatorname{Re}(Z_{P1} + Z_{P2})}\right) = \arctan\left(\frac{Q_{P1} + Q_{P2}}{I_{P1} + I_{P2}}\right)$$

$Z_{P1}$ and $Z_{P2}$ being the complex samples of the signal, and **in that** the code phase discriminator (74) delivers a phase error $\delta\varepsilon$ such that:

$$\delta\varepsilon = \arctan\left(\frac{\mathrm{Im}\,(Z_{P1}\,/\,\overline{Z}_{P2})}{\mathrm{Re}(Z_{P1}\,/\,\overline{Z}_{P2})}\right) = \arctan\left(\frac{I_{P2}Q_{P1}\,-\,I_{P1}Q_{P2}}{I_{P1}I_{P2}\,+\,Q_{P1}Q_{P2}}\right).$$

9. The pinpointing receiver as claimed in claims 1 to 7, **characterized in that**, with data, the integration of the samples ($I_P$, $Q_P$) is carried out over the duration of the data bits, the carrier phase discriminator delivering a phase error:

$$\delta\varphi = \arctan\left(\frac{\mathrm{Im}\,(\varepsilon_1 Z_{P1}\,+\,\varepsilon_2 Z_{P2})}{\mathrm{Re}\,(\varepsilon_1 Z_{P1}\,+\,\varepsilon_2 Z_{P2})}\right) = \arctan\left(\frac{\varepsilon_1 Q_{P1}\,+\,\varepsilon_2 Q_{P2}}{\varepsilon_1 I_{P1}\,+\,\varepsilon_2 I_{P2}}\right)$$

where $\varepsilon_1 = \mathrm{sign}(I_{P1})$ $\varepsilon_2 = sign(I_{P2})$
and **in that** the code phase discriminator delivers a code phase error:

$$\delta\varphi = \arctan\left(\frac{\mathrm{Im}\,(Z_{P1}\,/\,\overline{Z}_{P2})}{\mathrm{Re}(Z_{P1}\,/\,\overline{Z}_{P2})}\right) = \arctan\left(\frac{I_{P2}Q_{P1}\,-\,I_{P1}Q_{P2}}{I_{P1}I_{P2}\,+\,Q_{P1}Q_{P2}}\right).$$

10. The pinpointing receiver as claimed in claims 1 to 3, **characterized in that** the carrier numerically controlled oscillators (NCO p) (48, 50) deliver, on the basis of the carrier speed signal Vpc and of the code speeds Vcc, output respectively by the central-carrier loop corrector (72) and the code loop corrector (76), the two respective local carriers ($F_{I1}$, $F_{Q1}$) in the case of the first correlation channel (44) and ($F_{I2}$, $F_{Q2}$) in the case of the second correlation channel (46) and **in that**, on the one hand, the numerically controlled oscillator (48) of the carrier correlation channel (44) of the first correlator circuit is controlled by a signal p4 output by a summer Sm4, the summer Sm4 taking the sum of the carrier speed signal Vpc.(1-G1) plus the code speed signal Vcc.G1 and, on the other hand, the numerically controlled oscillator (50) of the carrier correlation channel (46) of the second correlator circuit is controlled by a signal p5 output by a summer Sm5, the summer Sm5 taking the sum of the carrier speed signal Vpc.(1+G2) plus the code speed signal Vcc.(-G2), the subcarrier frequency $F_{SP}$ being:

$$F_{SP} = (F_{P1} - F_{P2})$$

and the central carrier frequency $F_{pc}$ being:

$$F_{pc} = (F_{P1} + F_{P2})/2$$

where $F_{P1}$ is the frequency of carrier 1 and $F_{P2}$ is the frequency of carrier 2.

11. The pinpointing receiver as claimed in claim 10, **characterized in that** the code numerically controlled oscillators (NCO c) (56, 58) deliver, on the basis of the subcarrier speed signal Vcc output by the code loop corrector (76), the respective local code (Lc1, Lc2) for each code channel and the local despreading codes.

12. The pinpointing receiver as claimed in either of claims 1 and 2, **characterized in that** the device comprises three numerically controlled oscillators per channel for the signals S1 and S2.

13. The pinpointing receiver as claimed in claim 12, **characterized in that** each correlator circuit (40, 42) comprises a correlation channel (100, 102, 200, 202) for in-phase and quadrature correlation between its respective received signal (S1, S2) and two respective local carriers at the central frequency, ($F_{PCI1}$, $F_{PCQ1}$) in the case of the first correlation channel (100, 102) and ($F_{PCI2}$, $F_{PCQ2}$) in the case of the second correlation channel (102, 202), these local quadrature carriers being generated by a respective central-carrier numerically controlled oscillator (104, 106, 204, 206) controlled by a central-carrier speed signal (Vpc) output by the carrier loop corrector (72) and **in that** the outputs of these central-carrier correlation channels are delivered to subcarrier correlation channels (108, 110, 208, 210) and then to the code correlation channels (112, 212, 114, 214), **in that** the subcarrier correlation channels (108, 110, 208, 210) carry out the complex correlation between the outputs of these central-carrier correlation channels and respective local in-phase and quadrature subcarriers ($F_{SPI1}$, $F_{SPQ1}$) and ($F_{SPI2}$, $F_{SPQ2}$).

14. The pinpointing receiver as claimed in claim 13, **characterized in that** the respective local in-phase and quadrature subcarriers ($F_{SPI1}$, $F_{SPQ1}$) and ($F_{SPI2}$, $F_{SPQ2}$) are generated, the first ones by a first subcarrier numerically controlled oscillator (116) controlled by the code speed signal Vcc output by the code loop corrector (76) and the second ones by a second subcarrier numerically controlled oscillator (118) controlled by the code speed signal Vcc multiplied by -1, output by the code loop corrector (76).

15. The pinpointing receiver as claimed in claim 14, **characterized in that** the signals output by the subcarrier correlation channels are then correlated in the respective code correlation channels (112, 114) with the local code delivered by a respective local-code number generator (120, 122) controlled by the code speed signal Vcc.

16. The pinpointing receiver as claimed in claim 13, **characterized in that** the respective local subcarriers ($F_{SPI1}$, $F_{SPQ1}$ and $F_{SPI2}$, $F_{SPQ2}$) for subcarrier correlation are generated, the first ones by a first subcarrier numerically controlled oscillator (216) controlled by a signal p6 output by a summer Sm6, the signal p6 resulting from the sum of the carrier speed signal Vpc plus the code speed signal Vcc and the second ones by a second subcarrier numerically controlled oscillator (218) controlled by a signal p7 resulting from the signal p6, output by the summer Sm6, multiplied by -1 and **in that** the signals output by the subcarrier correlation channels are then correlated in the respective code correlation channels (212, 214) with the local code delivered by a respective local-code number generator (220, 222) controlled by a signal p8 output by a summer Sm7, the signal p8 resulting from the sum of the carrier speed signal Vpc plus the code speed signal Vcc.

17. The pinpointing receiver as claimed in one of claims 1 to 16, **characterized in that**, when the received signals (S1, S2) are synchronous codewise and carrierwise, the energy search is carried out synchronously between the two signals, the energy search taking place on the basis of the signals $I_{P1}$, $Q_{P1}$, and $I_{P2}$, $Q_{P2}$ output by the integrators (60, 62) by calculating:

$$\text{energy} = \left(I_{P1} + I_{P2}\right)^2 + \left(Q_{P1} + Q_{P2}\right)^2$$

and **in that** the Doppler assumptions are scanned over the central carrier (82) and the time assumptions (84) are scanned both over the codes and over the phase differences between the carriers, in accordance with the principle of the invention, and **in that** the maximum power peaks of the autocorrelation function are chosen.

18. The pinpointing receiver as claimed in claim 17, **characterized in that** the scanning takes place with two time assumptions in parallel, separated by the half-width (e1, e2) of a peak, over the autocorrelation function so as to never have two zeros simultaneously and **in that**, once the energy has been found under the Doppler and time assumptions, the search is refined in order to determine the main peak and then the carrier and time loops are closed by applying the discriminators (70, 74) and the loop correctors (72, 76) of the receiver according to the invention.

19. The pinpointing receiver as claimed in one of claims 1 to 16, **characterized in that**, when the received signals (S1, S2) are synchronous codewise and carrierwise, the energy search is carried out synchronously between the two signals, the energy search taking place on the basis of the signals $I_{P1}$, $Q_{P1}$, and $I_{P2}$, $Q_{P2}$ output by the integrators (60, 62) by calculating:

$$\text{energy} = \left(I_{P1}^2 + Q_{P1}^2\right) + \left(I_{P2}^2 + Q_{P2}^2\right)$$

and **in that** the same Doppler (and phase) assumptions are scanned over each carrier (86) and the same time assumptions (88) are scanned over the two codes, eliminating the phase of the carrier of each channel by taking the quadratic sum of the two channels, the resulting autocorrelation function no longer being ambiguous and no longer requiring a parallel scan.

20. The pinpointing receiver as claimed in claim 19, **characterized in that**, once the energy has been found under the Doppler and time assumptions, the search is refined in order to have a precise estimate of the positions of the codes and of the Doppler, and then the carrier and time loops are closed by applying the discriminators (70, 74) and the loop correctors (72, 76) and by changing the manner of applying the speed commands output by the carrier loop corrector (72) and the code loop corrector (76), in accordance with the principle of the invention.

21. The pinpointing receiver as claimed in claims 1 to 18, **characterized in that**, when the received signals (S1, S2) are desynchronized, the receiver is initialized:

- by independently carrying out the acquisition of the signals and then making the carrier and code loops converge;
- by identifying the amplitudes of the signals in the discrete channels;
- by applying the code and carrier discriminators of the invention, after having normalized the complex samples $Z_{P1}$ and $Zp_2$ by their respective amplitudes; and
- by changing the manner of applying the speed commands output by the carrier loop corrector (72) and the code loop corrector (76), in accordance with the principle of the invention.

**Patentansprüche**

1. Empfänger zur Positionsortung mittels Satellit, der eine kombinierte Verarbeitung eines ersten (S1) und eines zweiten (S2) empfangenen Funksignals, die von der Frequenz her getrennt sind, bewirken soll, **dadurch gekennzeichnet, dass** er Folgendes umfasst:

- einen ersten (40) und einen zweiten (42) Korrelatorschaltkreis, die jeweils das erste und das zweite empfangene Signal empfangen, wobei jeder Korrelator einen Pfad der Inphasen- und Quadraturkorrelation (44, 46) zwischen dem jeweiligen empfangenen Signal und einem jeweiligen lokalen Träger ($F_{I1}$, $F_{Q1}$ und $F_{I2}$, $F_{Q2}$), einen Codekorrelationspfad (52, 54) zwischen dem empfangenen Signal, das in Bezug auf I und Q korreliert ist, und einen jeweiligen lokalen Code ($L_{C1}$, $L_{C2}$), einen Integrator (60, 62) über den Codekorrelationspfad aufweist, wobei der Empfänger außerdem Folgendes umfasst:
- einen Phasendiskriminator (70) eines zentralen Trägers zwischen den zwei Trägern der empfangenen Signale, wobei der Phasendiskriminator auf Grundlage von Signalen Ip1 und Qp1 und Ip2 und Qp2 am Ausgang der zwei Integratoren und nach Phasenschleifenkorrektur (76) ein Signal der Geschwindigkeit des zentralen Trägers (Vpc) liefert;
- eine Vorrichtung, die auf Grundlage der Geschwindigkeit des zentralen Trägers und einer Geschwindigkeit eines Zwischenträgers (Vpc) die jeweiligen lokalen Träger ($F_{I1}$, $F_{Q1}$ und $F_{I2}$, $F_{Q2}$) für die Trägerkorrelationspfade liefert, wobei dieser Zwischenträger das Abbild von Hüben zwischen jedem Träger empfangener Signale und dem zentralen Träger ist;
- einen Phasendiskriminator (74) eines Codes, der auf Grundlage der Signale Ip1 und Qp1 und Ip2 und Qp2 am Ausgang der Integratoren (60, 62) und nach einer Codeschleifenkorrektur (76) das Signal der Geschwindigkeit des Zwischenträgers (Vcc) für die Träger- und Codekorrelationspfade liefert;
- einen digital kontrollierten Oszillator (56, 58) über den Codekorrelationscode, wobei der Oszillator auf Grundlage der Geschwindigkeit des Zwischenträgers (oder der Geschwindigkeit des Codes) den jeweiligen lokalen Code für jeden Codepfad liefert.

2. Ortungsempfänger nach Anspruch 1, **dadurch gekennzeichnet, dass** die Codekorrelationsfunktion, die aus der erfindungsgemäßen Verarbeitung empfangener Signale resultiert, das Produkt zwischen der Hülle der Funktion der Korrelation des einzigen Codes (Cs) und einer Sinusfunktion (Fs) mit gleicher Frequenz abseits der Frequenz zwischen den Mitten von Banden empfangener Signale ist.

3. Ortungsempfänger nach Anspruch 1 oder 2, **dadurch gekennzeichnet, dass** er eine einzige Trägerschleife und eine einzige Codeschleife zum Verarbeiten der zwei empfangenen Signale (S1, S2) umfasst, wobei die Trägerschleife die Phase des zentralen Trägers lokaler Signale mit der Phase des zentralen Trägers empfangener Signale regelt, die Codeschleife oder die Zwischenträgerschleife die Phase des lokalen Zwischenträgers, Abbild des Phasenhubs zwischen den Trägern der zwei lokalen Signale, mit der Phase des empfangenen Zwischenträgers, Abbild des Phasenhubs zwischen den zwei empfangenen Signalen, und die Position lokaler Codes mit den empfangenen Codes regelt.

4. Ortungsempfänger nach den Ansprüchen 1 bis 3, **dadurch gekennzeichnet, dass** zum Erzeugen der lokalen Träger von Trägerkorrelationspfaden, $(F_{I1}, F_{Q1})$ für den ersten Korrelationspfad (44) und $(F_{I2}, F_{Q2})$ für den zweiten (46), der zentrale Träger zwischen den Signalen und der Zwischenträger berücksichtigt werden muss, wobei dieser Zwischenträger das Abbild von Hüben zwischen jedem Träger des empfangenen Signals und dem zentralen Träger ist, die digital kontrollierten Oszillatoren (48, 50) des Trägers (NCO p) auf Grundlage des Signals der Geschwindigkeit des Trägers (Vpc) und der Geschwindigkeiten des Codes (Vcc), jeweils am Ausgang des Korrekturglieds (72) der Schleife des zentralen Trägers und des Codeschleifenkorrekturglieds (76), die zwei jeweiligen lokalen Träger $(F_{I1}, F_{Q1})$ für den ersten Korrelationspfad (44) und $(F_{I2}, F_{Q2})$ für den zweiten Pfad (46) liefern.

5. Ortungsempfänger nach Anspruch 4, **dadurch gekennzeichnet, dass** einerseits der digital kontrollierte Oszillator (48) des Trägerkorrelationspfads (44) des ersten Korrelatorschaltkreises durch ein Signal p1 am Ausgang eines Summierers Sm1 gesteuert wird, wobei der Summierer Sm1 die Summe des Signals der Geschwindigkeit des Trägers Vpc plus dem Signal der Geschwindigkeit des Codes Vcc.G1 durchführt, wobei G1 eine Verstärkung ist, die von dem Verhältnis zwischen der Frequenz des Zwischenträgers $F_{SP}$ und der Frequenz des Trägers des ersten Signals $F_{P1}$ gegeben wird (G1 = $F_{SP}/F_{P1}$), und andererseits der digital kontrollierte Oszillator (50) des Trägerkorrelationspfads (46) des zweiten Korrelatorschaltkreises durch ein Signal p2 am Ausgang eines Summierers Sm2 gesteuert wird, wobei der Summierer Sm2 die Summe des Signals der Geschwindigkeit des Trägers Vpc plus dem Signal der Geschwindigkeit des Codes Vcc.(-G2) durchführt, wobei G2 eine Verstärkung ist, die von dem Verhältnis zwischen der Frequenz des Zwischenträgers $F_{SP}$ und der Frequenz des Trägers des zweiten Signals $F_{P2}$ gegeben wird (G2 = $F_{SP}/F_{P2}$), wobei die Frequenz des Zwischenträgers $F_{SP}$ wie folgt ist:

$$F_{SP} = (F_{P1} - F_{P2})/2,$$

und die Frequenz des zentralen Trägers $F_{PC}$ wie folgt ist:

$$F_{PC} = (F_{P1} + F_{P2})/2, \text{ wobei:}$$

$F_{P1}$ = Frequenz des Trägers 1
$F_{P2}$ = Frequenz des Trägers 2.

6. Ortungsempfänger nach Anspruch 5, **dadurch gekennzeichnet, dass** die digital kontrollierten Oszillatoren (56, 58) des Codes (NCO c) auf Grundlage des Signals der Geschwindigkeit Vcc des Zwischenträgers am Ausgang des Codeschleifenkorrekturglieds 76 den jeweiligen lokalen Code (Lc1, Lc2) für jeden Codekorrelationspfad liefern.

7. Ortungsempfänger nach Anspruch 5 oder 6, **dadurch gekennzeichnet, dass** die Codeschleife von der Trägerschleife unterstützt wird, die digital kontrollierten Oszillatoren (56, 58) der Codekorrelationspfade (52, 54) durch ein Signal p3 am Ausgang eines Summierers Sm3, das aus der Summe des Signals der Geschwindigkeit des Trägers (Vpc) mit dem Signal der Geschwindigkeit des Codes (Vcc) resultiert, gesteuert wird.

8. Ortungsempfänger nach den Ansprüchen 1 bis 7, **dadurch gekennzeichnet, dass** der Phasendiskriminator (70) des Trägers einen Phasenfehler $\delta\varphi$ wie folgt liefert:

$$\delta\varphi = \arctan\left(\frac{\mathrm{Im}(Z_{P1} + Z_{P2})}{\mathrm{Re}(Z_{P1} + Z_{P2})}\right) = \arctan\left(\frac{Q_{P1} + Q_{P2}}{I_{P1} + I_{P2}}\right),$$

wobei $Z_{P1}$ und $Z_{P2}$ die komplexen Abtastwerte des Signals sind,
und dadurch, dass der Phasendiskriminator (74) des Codes einen Phasenfehler $\delta\varepsilon$ wie folgt liefert:

$$\delta\varepsilon = \arctan\left(\frac{\mathrm{Im}(Z_{P1}/\overline{Z}_{P2})}{\mathrm{Re}(Z_{P1}/\overline{Z}_{P2})}\right) = \arctan\left(\frac{I_{P2}Q_{P1} - I_{P1}Q_{P2}}{I_{P1}I_{P2} + Q_{P1}Q_{P2}}\right).$$

**9.** Ortungsempfänger nach den Ansprüchen 1 bis 7, **dadurch gekennzeichnet, dass** mit den Daten die Integration von Abtastwerten ($I_P$, $Q_P$) über die Dauer von Datenbits vorgenommen wird, wobei der Phasendiskriminator des Trägers einen Phasenfehler liefert:

$$\delta\varphi = \arctan\left(\frac{\mathrm{Im}(\varepsilon_1 Z_{P1} + \varepsilon_2 Z_{P2})}{\mathrm{Re}(\varepsilon_1 Z_{P1} + \varepsilon_2 Z_{P2})}\right) = \arctan\left(\frac{\varepsilon_1 Q_{P1} + \varepsilon_2 Q_{P2}}{\varepsilon_1 I_{P1} + \varepsilon_2 I_{P2}}\right),$$

wobei $\varepsilon_1$ = *Vorzeichen($I_{P1}$)* $\varepsilon_2$ = *Vorzeichen ($I_{P2}$)*,
und **dadurch**, dass der Phasendiskriminator des Codes einen Phasenfehler des Codes liefert:

$$\delta\varepsilon = \arctan\left(\frac{\mathrm{Im}(Z_{P1}/\overline{Z}_{P2})}{\mathrm{Re}(Z_{P1}/\overline{Z}_{P2})}\right) = \arctan\left(\frac{I_{P2}Q_{P1} - I_{P1}Q_{P2}}{I_{P1}I_{P2} + Q_{P1}Q_{P2}}\right).$$

**10.** Ortungsempfänger nach den Ansprüchen 1 bis 3, **dadurch gekennzeichnet, dass** die digital kontrollierten Oszillatoren (48, 50) des Trägers (NCO p) auf Grundlage des Signals der Geschwindigkeit des Trägers Vpc und der Geschwindigkeiten des Codes Vcc, jeweils am Ausgang des Korrekturglieds (72) der Schleife des zentralen Trägers und des Codeschleifenkorrekturglieds (76), die zwei jeweiligen lokalen Träger ($F_{I1}$, $F_{Q1}$) für den ersten Korrelationspfad (44) und ($F_{I2}$, $F_{Q2}$) für den zweiten Pfad (46) liefern und dadurch, dass einerseits der digital kontrollierte Oszillator (48) des Trägerkorrelationspfads (44) des ersten Korrelatorschaltkreises durch ein Signal p4 am Ausgang eines Summierers Sm4 gesteuert wird, wobei der Summierer Sm4 die Summe des Signals der Geschwindigkeit des Trägers Vpc.(1-G1) plus dem Signal der Geschwindigkeit des Codes Vcc.G1 durchführt, und andererseits der digital kontrollierte Oszillator (50) des Trägerkorrelationspfads (46) des zweiten Korrelatorschaltkreises durch ein Signal p5 am Ausgang eines Summierers Sm5 gesteuert wird, wobei der Summierer Sm5 die Summe des Signals der Geschwindigkeit des Trägers Vpc.(1+G2) plus dem Signal der Geschwindigkeit des Codes Vcc.(-G2) durchführt, wobei die Frequenz des Zwischenträgers $F_{SP}$ wie folgt ist:

$$F_{SP} = (F_{P1} - F_{P2}),$$

und die Frequenz des zentralen Trägers $F_{PC}$ wie folgt ist:

$$F_{PC} = (F_{P1} + F_{P2})/2, \text{ wobei:}$$

$F_{P1}$ = Frequenz des Trägers 1
$F_{P2}$ = Frequenz des Trägers 2.

**11.** Ortungsempfänger nach Anspruch 10, **dadurch gekennzeichnet, dass** die digital kontrollierten Oszillatoren (56, 58) des Codes (NCO c) auf Grundlage des Signals der Geschwindigkeit Vcc des Zwischenträgers am Ausgang des Codeschleifenkorrekturglieds (76) den jeweiligen lokalen Code (Lc1, Lc2) für jeden Codepfad und die lokalen Entspreizungscodes liefern.

**12.** Ortungsempfänger nach Anspruch 1 oder 2, **dadurch gekennzeichnet, dass** die Vorrichtung drei digital kontrollierte Oszillatoren über den Pfad der Signale S1 und S2 umfasst.

**13.** Ortungsempfänger nach Anspruch 12, **dadurch gekennzeichnet, dass** jeder Korrelatorschaltkreis (40, 42) einen Pfad der Inphasen- und Quadraturkorrelation (100, 102, 200, 202) zwischen seinem jeweiligen empfangenen Signal S1, S2 und zwei jeweiligen lokalen Trägern mit der zentralen Frequenz, ($F_{PCI1}$, $F_{PCQ1}$) für den ersten Korrelationspfad (100, 102) und ($F_{PCI2}$, $F_{PCQ2}$) für den zweiten Pfad (102, 202), umfasst, wobei die lokalen Quadraturträger von einem jeweiligen Oszillator mit digitaler Steuerung des zentralen Trägers (104, 106, 204, 206) erzeugt werden, die durch ein Signal der Geschwindigkeit des zentralen Trägers Vpc am Ausgang des Trägerschleifenkorrekturglieds (72) kontrolliert werden, und dadurch, dass die Ausgänge dieser Pfade der Korrelation des zentralen Trägers an die Zwischenträgerkorrelationspfade (108, 110, 208, 210), dann an die Codekorrelationspfade (112, 212, 114, 214) geliefert werden, dadurch, dass die Zwischenträgerkorrelationspfade (108, 110, 208, 210) die komplexe Korrelation zwischen den Ausgängen dieser Pfade der Korrelation des zentralen Trägers und den jeweiligen lokalen Inphasen- und Quadraturzwischenträgern ($F_{SPI1}$, $F_{SPQ1}$) und ($F_{SPI2}$, $F_{SPQ2}$) bewirken.

**14.** Ortungsempfänger nach Anspruch 13, **dadurch gekennzeichnet, dass** die jeweiligen lokalen Inphasen- und Quadraturzwischenträger ($F_{SPI1}$, $F_{SPQ1}$) und ($F_{SPI2}$, $F_{SPQ2}$) erzeugt werden, die ersten von einem ersten Zwischenträgeroszillator mit digitaler Steuerung (116), der durch das Signal der Geschwindigkeit des Codes Vcc am Ausgang des Codeschleifenkorrekturglieds (76) gesteuert wird, und die zweiten von einem zweiten Zwischenträgeroszillator mit digitaler Steuerung (118), der durch das Signal der Geschwindigkeit des Codes Vcc, multipliziert mit -1, am Ausgang des Codeschleifenkorrekturglieds (76) gesteuert wird.

**15.** Ortungsempfänger nach Anspruch 14, **dadurch gekennzeichnet, dass** die Signale am Ausgang von Zwischenträgerkorrelationspfaden anschließend in den jeweiligen Codekorrelationspfaden (112, 114) mit dem lokalen Code korreliert werden, der von einem jeweiligen digitalen Generator (120, 122) von lokalem Code geliefert wird, der durch das Signal der Geschwindigkeit des Codes Vcc gesteuert wird.

**16.** Ortungsempfänger nach Anspruch 13, **dadurch gekennzeichnet, dass** die jeweiligen lokalen Zwischenträger ($F_{SPI1}$, $F_{SPQ1}$ und $F_{SPI2}$, $F_{SPQ2}$) der Zwischenträgerkorrelation erzeugt werden, die ersten von einem ersten Zwischenträgeroszillator mit digitaler Steuerung (216), der durch ein Signal p6 am Ausgang eines Summierers Sm6 gesteuert wird, wobei das Signal p6 aus der Summe des Signals der Geschwindigkeit des Trägers Vpc mit dem Signal der Geschwindigkeit des Codes Vcc resultiert, und die zweiten von einem zweiten Zwischenträgeroszillator mit digitaler Steuerung (218), der durch ein Signal p7 gesteuert wird, das aus dem Signal p6 am Ausgang des Summierers Sm6, multipliziert mit -1, resultiert, und dadurch, dass die Signale am Ausgang der Zwischenträgerkorrelationspfade anschließend in den jeweiligen Codekorrelationspfaden (212, 214) mit dem lokalen Code korreliert werden, der von einem jeweiligen digitalen Generator (220, 222) von lokalem Code geliefert wird, der durch ein Signal p8 am Ausgang eines Summierers Sm7 gesteuert wird, wobei das Signal p8 aus der Summe des Signals der Geschwindigkeit des Trägers Vpc mit dem Signal der Geschwindigkeit des Codes Vcc resultiert.

**17.** Ortungsempfänger nach den Ansprüchen 1 bis 16, **dadurch gekennzeichnet, dass**, wenn die empfangenen Signale (S1, S2) in Bezug auf Code und Träger synchron sind, die Suche der Energie auf synchrone Weise zwischen den zwei Signalen durchgeführt wird, wobei die Suche der Energie auf Grundlage der Signale $I_{P1}$, $Q_{P1}$ und $I_{P2}$, $Q_{P2}$ am Ausgang der Integratoren (60, 62) durchgeführt wird, indem die folgende Berechnung vorgenommen wird:

Energie = $(I_{P1} + I_{P2})^2 + (Q_{P1} + Q_{P2})^2$, und dadurch, dass die Doppler-Hypothesen an dem zentralen Träger (82) und die Zeithypothesen (84) gleichzeitig an den Codes und den Phasenhüben zwischen den Trägern gemäß dem Prinzip der Erfindung abgetastet werden, und dadurch, dass die maximalen Leistungsspitzen der Autokorrelationsfunktion gewählt werden.

**18.** Ortungsempfänger nach Anspruch 17, **dadurch gekennzeichnet, dass** die Abtastung mit zwei parallelen Zeithypothesen, der Abweichung der halben Breite (e1, e2) einer Spitze, an der Autokorrelationsfunktion durchgeführt wird, so dass niemals zwei Nullen gleichzeitig vorliegen, und dadurch, dass, sobald die Energie mit den Doppler- und Zeithypothesen gefunden wurde, die Suche verfeinert wird, um die Hauptspitze zu bestimmen, dann die Träger- und Zeitschleifen geschlossen werden, indem die Diskriminatoren (70, 74) und die Schleifenkorrekturglieder (72, 76) des erfindungsgemäßen Empfängers angewendet werden.

**19.** Ortungsempfänger nach den Ansprüchen 1 bis 16, **dadurch gekennzeichnet, dass**, wenn die empfangenen Signale (S1, S2) in Bezug auf Code und Träger synchron sind, die Suche der Energie auf synchrone Weise zwischen den zwei Signalen durchgeführt wird, wobei die Suche der Energie auf Grundlage der Signale $I_{P1}$, $Q_{P1}$ und $I_{P2}$, $Q_{P2}$ am Ausgang der Integratoren (60, 62) durchgeführt wird, indem die folgende Berechnung vorgenommen wird:

Energie = $(I_{P1}{}^2 + Q_{P1}{}^2) + (I_{P1}{}^2 + Q_{P2}{}^2)$, und dadurch, dass dieselben Doppler-Hypothesen (und Phasenhypothesen) an jedem Träger (86) und dieselben Zeithypothesen (88) an den zwei Codes abgetastet werden, indem die Phase des Trägers jedes Pfads eliminiert wird, indem die Quadratsumme der zwei Pfade erstellt wird, wobei die resultierende Autokorrelationsfunktion nicht mehr doppeldeutig ist und eine parallele Abtastung nicht mehr erforderlich ist.

20. Ortungsempfänger nach Anspruch 19, **dadurch gekennzeichnet, dass**, sobald die Energie mit einer Doppler- und Zeithypothese gefunden wurde, die Suche verfeinert wird, um eine präzise Einschätzung der Positionen der Codes und des Dopplers zu erstellen, dann die Träger- und Zeitschleifen geschlossen werden, indem die Diskriminatoren (70, 74) und die Schleifenkorrekturglieder (72, 76) angewendet werden und die Art des Anwendens der Steuerungen der Geschwindigkeit am Ausgang des Trägerschleifenkorrekturglieds (72) und des Codeschleifenkorrekturglieds (76) gemäß dem Prinzip der Erfindung geändert wird.

21. Ortungsempfänger nach den Ansprüchen 1 bis 18, **dadurch gekennzeichnet, dass**, wenn die empfangenen Signale (S1, S2) nicht synchron sind, die Initialisierung des Empfängers Folgendes bewirkt:

- Durchführen einer unabhängigen Erfassung von Signalen, dann Konvergierenlassen der Träger- und Codeschleifen;
- Identifizieren der Amplituden der Signale auf den punktuellen Pfaden;
- Anwenden der Code- und Trägerdiskriminatoren der Erfindung, nachdem die komplexen Abtastwerte $Z_{P1}$ und $Z_{P2}$ mit ihren jeweiligen Amplituden normalisiert wurden;
- und Ändern der Art des Anwendens der Steuerungen der Geschwindigkeit am Ausgang des Trägerschleifenkorrekturglieds (72) und des Codeschleifenkorrekturglieds (76) gemäß dem Prinzip der Erfindung.

FIG.1

EP 1 514 131 B1

FIG.2

FIG.3

23

FIG.4

FIG.5

FIG.6

FIG.7

FIG.8

FIG.9